# EUROPEAN PATENT APPLICATION

(11) **EP 4 668 751 A1**
(43) Date of publication of application: **24.12.2025**
(21) Application number: 24769767.5
(22) Date of filing: 01.03.2024
(51) Int. Cl.: H04N 19/91, H04N 19/42, G06N 3/02

(54) **ENCODING METHOD, DECODING METHOD AND ELECTRONIC DEVICE**

(30) Priority: 10.03.2023 CN 202310269663; 18.04.2023 CN 202310458544
(71) Applicant: Huawei Technologies Co., Ltd., Shenzhen, Guangdong 518129 (CN)
(72) Inventor: MAO, Jue, Shenzhen, Guangdong 518129 (CN); ZHAO, Yin, Shenzhen, Guangdong 518129 (CN)
(74) Representative: Eisenführ Speiser
(86) International application number: PCT/CN2024/079572
(87) International publication number: WO 2024/188073

(57) **Abstract**

This application provides an encoding and decoding method, and an electronic device. The encoding method includes: obtaining a to-be-encoded picture; extracting a feature map of the to-be-encoded picture, and determining a probability estimation result of a to-be-encoded region in the feature map; determining, based on an original feature value of the to-be-encoded region and a reconstructed feature value of the to-be-encoded region that is determined after adaptive entropy encoding skip processing is performed on the to-be-encoded region, whether to perform adaptive entropy encoding skip processing on the to-be-encoded region; if yes, performing entropy encoding processing on at least one sub-block in the to-be-encoded region or skipping entropy encoding processing on the at least one sub-block based on the probability estimation result of the to-be-encoded region, and setting a flag corresponding to the to-be-encoded region to a first value; or if no, performing entropy encoding processing on the to-be-encoded region based on the probability estimation result of the to-be-encoded region, and setting a flag corresponding to the to-be-encoded region to a second value; and encoding the flag. This can avoid introducing an artifact into a reconstructed picture.

## Description

This application claims priority to Chinese Patent Application No. 202310269663.2, filed with the China National Intellectual Property Administration on March 10, 2023 and entitled "ENCODING AND DECODING METHOD", which is incorporated herein by reference in its entirety.

This application further claims priority to Chinese Patent Application No. 202310458544.1, filed with the China National Intellectual Property Administration on April 18, 2023 and entitled "ENCODING AND DECODING METHOD, AND ELECTRONIC DEVICE", which is incorporated herein by reference in its entirety.

### TECHNICAL FIELD

Embodiments of this application relate to the field of encoding and decoding, and in particular, to an encoding and decoding method, and an electronic device.

### BACKGROUND

An artificial intelligence (Artificial Intelligence, AI) picture compression algorithm is implemented based on deep learning, and has better compression effect than a conventional picture compression technology (such as joint photographic experts group (Joint Photographic Experts Group, JPEG) or better portable graphics (Better Portable Graphics, BPG)). An end-to-end picture coding solution based on deep learning is widely used.

Currently, in an existing end-to-end picture coding process, a codec skips entropy encoding and decoding, which may introduce an artifact (artifact).

### SUMMARY

In view of this, this application provides an encoding and decoding method, and an electronic device. The encoding and decoding method can effectively avoid introducing an artifact (artifact) into a reconstructed picture.

According to a first aspect, an embodiment of this application provides an encoding method. The method includes: first obtaining a to-be-encoded picture; then extracting a feature map of the to-be-encoded picture, and determining a probability estimation result of a to-be-encoded region in the feature map; then determining, based on an original feature value of the to-be-encoded region and a reconstructed feature value of the to-be-encoded region that is determined after adaptive entropy encoding skip processing is performed on the to-be-encoded region, whether to perform adaptive entropy encoding skip processing on the to-be-encoded region; if yes, performing entropy encoding processing on at least one sub-block in the to-be-encoded region or skipping entropy encoding processing on the at least one sub-block based on the probability estimation result of the to-be-encoded region, and setting a flag corresponding to the to-be-encoded region to a first value; or if no, performing entropy encoding processing on the to-be-encoded region based on the probability estimation result of the to-be-encoded region, and setting a flag corresponding to the to-be-encoded region to a second value; and then encoding the flag.

If a difference between the original feature value of the to-be-encoded region and the reconstructed feature value of the to-be-encoded region that is determined after adaptive entropy encoding skip processing is performed on the to-be-encoded region is small, it indicates that performing adaptive entropy encoding skip processing on the to-be-encoded region does not introduce an artifact into the reconstructed picture of the to-be-encoded region. In this case, adaptive entropy encoding skip processing may be performed on the to-be-encoded region. If a difference between the original feature value of the to-be-encoded region and the reconstructed feature value of the to-be-encoded region that is determined after adaptive entropy encoding skip processing is performed on the to-be-encoded region is large, it indicates that performing adaptive entropy encoding skip processing on the to-be-encoded region introduces an artifact into the reconstructed picture of the to-be-encoded region. In this case, adaptive entropy encoding skip processing may not be performed on the to-be-encoded region. This can effectively avoid introducing the artifact into the reconstructed picture.

In addition, the flag is introduced to represent whether adaptive entropy encoding skip processing is performed on the to-be-encoded region, and the flag is written into a bitstream. In this way, the flag may be transferred to a decoder, so that the decoder learns whether to perform adaptive entropy decoding skip processing on a corresponding to-be-decoded region.

For example, the feature map of the to-be-encoded picture may be extracted by using the feature extraction module. The feature extraction module may be implemented based on a neural network. For example, the feature extraction module may be implemented based on a convolutional neural network (Convolutional Neural Networks, CNN). The CNN may be a neural network including a convolutional layer, and the neural network may further include a network layer such as an activation layer (such as ReLU or PReLU), a pooling layer (pooling layer), a batch normalization layer (BN layer), or a fully connected layer (Fully Connected layer). Conventional convolutional neural networks include LeNet, AlexNet, VGGNet, ResNet, and the like. For example, a basic CNN may include a backbone network (backbone network) and a head network (head network); and a complex CNN includes a backbone network, a neck network (neck network), and a head network (head network). A network included in the CNN is not limited in this application. For example, the feature extraction module may be implemented through multi-layer convolution stacking and combination with a non-linear mapping activation function.

For example, the feature map (feature map) is three-dimensional data that is output by the convolutional layer, the activation layer, the pooling layer, the batch normalization layer, and the like in the convolutional neural network, and three dimensions are respectively referred to as a width (Width), a height (Height), and a channel (Channel). For example, the feature map may include W*H*C feature points, and each feature point has a corresponding feature value. For example, the feature value may be a floating point number, where W, H, and C are all positive integers.

For example, a feature map used for entropy encoding processing and adaptive entropy encoding skip processing may be a quantized feature map.

For example, the feature map may be divided into a plurality of cubes (cube) by using w1×h1×c1 as a basic unit (w1 is an integer between 1 and W, h1 is an integer between 1 and H, and c1 is an integer between 1 and C). When c1=1, one cube means one block. One cube may be used as one to-be-encoded region.

In a possible manner, a probability estimation result of each feature point may be a probability P.

In a possible manner, when a probability estimation module performs Gaussian distribution estimation, a probability estimation result may include a Gaussian distribution parameter: a mean *µ* and a variance *σ*.

For example, the to-be-encoded region may include a plurality of feature points, and at least one feature point may be grouped into one sub-block. In this way, the to-be-encoded region may include a plurality of sub-blocks, and each sub-block may include at least one feature point. Adaptive entropy encoding skip processing may be: performing entropy encoding processing on at least one sub-block in the to-be-encoded region or skipping entropy encoding processing on the at least one sub-block based on the probability estimation result of the to-be-encoded region. In this way, adaptive entropy encoding skip processing may be performed on the to-be-encoded region by using a sub-block as a minimum unit, thereby improving encoding efficiency and reducing bit rate overheads.

For example, when a sub-block includes one feature point, adaptive entropy encoding skip processing may be: performing entropy encoding processing on at least one feature point in the to-be-encoded region or skipping entropy encoding processing on the at least one feature point based on the probability estimation result of the to-be-encoded region. In this way, the to-be-encoded region can be encoded by using a feature point as a minimum unit. Compared with encoding the to-be-encoded region by using a sub-block as a minimum unit, this can improve reconstruction quality.

In a possible manner, "setting a flag corresponding to the to-be-encoded region to a first value" may be performed first, then "encoding the flag" is performed, and then "performing entropy encoding processing on at least one sub-block in the to-be-encoded region or skipping entropy encoding processing on the at least one sub-block based on the probability estimation result of the to-be-encoded region" is performed.

In a possible manner, "performing entropy encoding processing on at least one sub-block in the to-be-encoded region or skipping entropy encoding processing on the at least one sub-block based on the probability estimation result of the to-be-encoded region" may be performed first, then "setting a flag corresponding to the to-be-encoded region to a first value" is performed, and then "encoding the flag" is performed.

In a possible manner, "setting a flag corresponding to the to-be-encoded region to a second value" may be performed first, then "encoding the flag" is performed, and then "performing entropy encoding processing on the to-be-encoded region based on the probability estimation result of the to-be-encoded region" is performed.

In a possible manner, "performing entropy encoding processing on the to-be-encoded region based on the probability estimation result of the to-be-encoded region" may be performed first, then "setting a flag corresponding to the to-be-encoded region to a second value" is performed, and then "encoding the flag" is performed.

In other words, this application does not limit a sequence of encoding the flag and performing entropy encoding processing or adaptive entropy encoding skip processing on the to-be-encoded region.

For example, after entropy encoding processing or adaptive entropy encoding skip processing is performed, a bitstream of the to-be-encoded region may be obtained; bitstreams of all to-be-encoded regions in the feature map may form a bitstream of the to-be-encoded picture; and the flag may be written into the bitstream as a new syntax element.

For example, the flag may be encoded to obtain a bitstream of the flag; and bitstreams of all to-be-encoded regions in the feature map and bitstreams of corresponding flags may form a bitstream of the to-be-encoded picture.

It should be understood that there may be a plurality of flag encoding manners. This is not limited in this application.

For example, the flag may be represented by a skip flag, a flag, or a cube flag.

For example, the first value may be set as required, for example, 1. The second value may be set as required, for example, 0. The first value is different from the second value.

According to the first aspect, encoding the flag includes: determining a value probability of the flag based on the probability estimation result of the to-be-encoded region, where the value probability of the flag is a probability that the flag is the first value or a probability that the flag is the second value; and encoding the flag based on the value probability of the flag.

For example, the flag may alternatively be written into the bitstream after flag binarization. Compared with writing the flag into the bitstream after flag binarization, encoding the flag based on the value probability of the flag can reduce bit rate overheads.

In this way, the flag is encoded by using the probability estimation result that can be obtained by both an encoder and the decoder, so that the decoder decodes the bitstream to obtain the flag.

According to the first aspect or any one of the foregoing implementations of the first aspect, determining, based on the original feature value of the to-be-encoded region and the reconstructed feature value of the to-be-encoded region that is determined after adaptive entropy encoding skip processing is performed on the to-be-encoded region, whether to perform adaptive entropy encoding skip processing on the to-be-encoded region includes: determining an error between the reconstructed feature value and the original feature value; and when the error is greater than an error threshold, determining to perform adaptive entropy encoding skip processing on the to-be-encoded region; or when the error is less than or equal to an error threshold, determining not to perform adaptive entropy encoding skip processing on the to-be-encoded region.

For example, the original feature value of the to-be-encoded region may include original feature values of the plurality of feature points included in the to-be-encoded region, and the reconstructed feature value of the to-be-encoded region may include reconstructed feature values of the plurality of feature points included in the to-be-encoded region.

For example, it may be determined, based on the error between the reconstructed feature value and the original feature value of the to-be-encoded region, whether to perform adaptive entropy encoding skip processing on the to-be-encoded region. For example, the error may be compared with the error threshold Thr. The error threshold Thr may be set based on a maximum error between the reconstructed feature value and the original feature value of the to-be-encoded region when no artifact occurs in the reconstructed picture of the to-be-encoded region. This is not limited in this application. When the error between the reconstructed feature value and the original feature value of the to-be-encoded region is greater than the error threshold Thr, it indicates that performing adaptive entropy encoding skip processing on the to-be-encoded region introduces an artifact into the reconstructed picture of the to-be-encoded region. In this case, adaptive entropy encoding skip processing may not be performed on the to-be-encoded region. When the error between the reconstructed feature value and the original feature value of the to-be-encoded region is less than or equal to the error threshold Thr, it may be determined that performing adaptive entropy encoding skip processing on the to-be-encoded region does not introduce an artifact into the reconstructed picture of the to-be-encoded region. In this case, adaptive entropy encoding skip processing may be performed on the to-be-encoded region.

According to the first aspect or any one of the foregoing implementations of the first aspect, the to-be-encoded region includes a plurality of sub-blocks, and the probability estimation result of the to-be-encoded region includes probability estimation results of the plurality of sub-blocks; and determining the value probability of the flag based on the probability estimation result of the to-be-encoded region includes: determining the value probability of the flag based on a sum of the probability estimation results of the plurality of sub-blocks in the to-be-encoded region.

For example, when the probability estimation result is a Gaussian distribution parameter, Gaussian distribution parameters of all feature points included in all sub-blocks in the to-be-encoded region may be accumulated, to obtain a Gaussian distribution parameter of the flag. A mean of the flag is *µ_{f}* = Σ*µ*, and a variance of the flag is *σ_{f}* = Σ*σ*. Then, a probability of a Gaussian distribution with the mean *µ_{f}* and the variance *σ_{f}* in an interval of [-0.5, 0.5] is used as the probability that the flag is the first value.

According to the first aspect or any one of the foregoing implementations of the first aspect, the to-be-encoded region includes a plurality of sub-blocks, the sub-block includes at least one feature point, and the probability estimation result of the to-be-encoded region includes probability estimation results of a plurality of feature points; and determining the value probability of the flag based on the probability estimation result of the to-be-encoded region includes: determining the value probability of the flag based on a number of feature points on which entropy encoding processing is skipped in the to-be-encoded region and a total number of feature points in the to-be-encoded region, where the number of feature points on which entropy encoding processing is skipped in the to-be-encoded region is determined based on the probability estimation results of the plurality of feature points included in the to-be-encoded region.

In a possible manner, when a probability P that a value of a feature point *ŷ*[*w*][*h*][*c*] is an original feature value k1 is greater than or equal to T0, the feature point *ŷ*[*w*][*h*][*c*] is determined as a feature point on which entropy encoding processing is skipped.

In a possible manner, when a Gaussian distribution parameter of a feature point *ŷ*[*w*][*h*][*c*] satisfies *abs*(*µ-k*1) *+ σ < T*1, the feature point *ŷ*[*w*][*h*][*c*] is determined as a feature point on which entropy encoding processing is skipped.

In a possible manner, when a probability estimation result of a sub-block satisfies a preset condition, a feature point *ŷ*[*w*][*h*][*c*] in the sub-block is determined as a feature point on which entropy encoding processing is skipped.

In a possible manner, the preset condition may be that a probability P of a sub-block is greater than or equal to T2. The probability P of the sub-block may be an average of probabilities P of all feature points in the sub-block, or may be a maximum value or a minimum value of probabilities P of all feature points in the sub-block. This is not limited in this application. T2 may be a preset threshold. T2 may be any value between 0 and 1. For example, T2 is 0.99, 0.98, 0.97, or 0.95. This is not limited in this application. In a possible manner, T2 may be equal to T0. In a possible manner, T2 may not be equal to T0.

In a possible manner, when the probability estimation result is a Gaussian distribution parameter, the preset condition may be that a Gaussian distribution parameter of a sub-block satisfies *abs*(*µ-k*) *+ σ < T*3*.* In a possible manner, a mean *µ* of the sub-block may be an average of means *µ* of all feature points in the sub-block, and a variance σ of the sub-block may be an average of variances σ of all the feature points in the block. In a possible manner, a mean *µ* of the sub-block may be a maximum value or a minimum value of means *µ* of all feature points in the sub-block, and a variance σ of the sub-block may be a maximum value or a minimum value of variances σ of all the feature points in the block. T3 may be a preset threshold. T3 may be any value between 0 and 1. For example, T3 is 0.2, 0.3, or 0.4. This is not limited in this application. In a possible manner, T3 may be equal to T1. In a possible manner, T3 may not be equal to T1.

According to the first aspect or any one of the foregoing implementations of the first aspect, the to-be-encoded region includes a plurality of sub-blocks, the probability estimation result of the to-be-encoded region includes probability estimation results of the plurality of sub-blocks, the sub-block includes at least one feature point, and the probability estimation result of the sub-block includes a probability estimation result of a feature point included in the sub-block; and performing entropy encoding processing on the at least one sub-block in the to-be-encoded region or skipping entropy encoding processing on the at least one sub-block based on the probability estimation result of the to-be-encoded region includes: for a first sub-block in the plurality of sub-blocks: when a probability estimation result of the first sub-block satisfies a preset condition, skipping entropy encoding processing on all feature points in the first sub-block; or when a probability estimation result of the first sub-block does not satisfy a preset condition, performing entropy encoding processing on all feature points in the first sub-block based on probability estimation results of all the feature points in the first sub-block.

According to a second aspect, an embodiment of this application provides a decoding method. The method includes: first receiving a bitstream; then determining a probability estimation result of a to-be-decoded region in a feature map corresponding to the bitstream, and decoding the bitstream to obtain a flag corresponding to the to-be-decoded region; when the flag is a first value, performing entropy decoding processing on at least one sub-block in the to-be-decoded region or setting a feature value of a feature point in the at least one sub-block to a specific value based on the probability estimation result of the to-be-decoded region; or when the flag is a second value, performing entropy decoding processing on the to-be-decoded region based on the probability estimation result of the to-be-decoded region, to obtain a feature value of a feature point in the to-be-decoded region; and then performing reconstruction based on a feature value of a feature point in the feature map, to obtain a reconstructed picture. Because the flag is set by an encoder based on whether adaptive entropy encoding skip processing causes an artifact to be introduced into the reconstructed picture, a decoder determines, based on the flag in a decoding process, whether adaptive entropy decoding skip processing or entropy decoding processing is performed on the to-be-decoded region. This can avoid introducing an artifact into a reconstructed picture obtained through decoding.

According to the second aspect, decoding the bitstream to obtain the flag corresponding to the to-be-decoded region includes: determining a value probability of the flag based on the probability estimation result of the to-be-decoded region, where the value probability of the flag is a probability that the flag is the first value or a probability that the flag is the second value; and decoding the bitstream to obtain the flag corresponding to the to-be-decoded region based on the value probability of the flag.

According to the second aspect or any one of the foregoing implementations of the second aspect, the to-be-decoded region includes a plurality of sub-blocks, and the probability estimation result of the to-be-decoded region includes probability estimation results of the plurality of sub-blocks; and determining the value probability of the flag based on the probability estimation result of the to-be-decoded region includes: determining the value probability of the flag based on a sum of the probability estimation results of the plurality of sub-blocks in the to-be-decoded region.

According to the second aspect or any one of the foregoing implementations of the second aspect, the to-be-decoded region includes a plurality of sub-blocks, the sub-block includes at least one feature point, and the probability estimation result of the to-be-decoded region includes probability estimation results of a plurality of feature points; and determining the value probability of the flag based on the probability estimation result of the to-be-decoded region includes: determining, based on the probability estimation results of the plurality of feature points included in the to-be-decoded region, a number of feature points on which entropy decoding processing is skipped in the to-be-decoded region; and determining the value probability of the flag based on the number of feature points on which entropy decoding processing is skipped in the to-be-decoded region and a total number of feature points in the to-be-decoded region.

According to the second aspect or any one of the foregoing implementations of the second aspect, the to-be-decoded region includes a plurality of sub-blocks, the probability estimation result of the to-be-decoded region includes probability estimation results of the plurality of sub-blocks, the sub-block includes at least one feature point, and the probability estimation result of the sub-block includes a probability estimation result of a feature point included in the sub-block; and performing entropy decoding processing on the at least one sub-block in the to-be-decoded region or setting the feature value of the feature point in the at least one sub-block to the specific value based on the probability estimation result of the to-be-decoded region, to obtain the feature value of the feature point in the to-be-decoded region includes: for a first sub-block in the plurality of sub-blocks: when a probability estimation result of the first sub-block satisfies a preset condition, setting feature values of all feature points in the first sub-block to a specific value; or when a probability estimation result of the first sub-block does not satisfy a preset condition, performing entropy decoding processing on all feature points in the first sub-block based on probability estimation results of all the feature points in the first sub-block, to obtain feature values of all the feature points in the first sub-block.

The second aspect and any one of the implementations of the second aspect respectively correspond to the first aspect and any one of the implementations of the first aspect. For technical effect corresponding to the second aspect and any one of the implementations of the second aspect, refer to technical effect corresponding to the first aspect and any one of the implementations of the first aspect. Details are not described herein again.

According to a third aspect, this application further provides an encoding method. The encoding method includes: first obtaining a to-be-encoded picture; then extracting a feature map of the to-be-encoded picture, and determining a probability estimation result of a to-be-encoded region in the feature map; then determining, based on an original feature value of the to-be-encoded region and a reconstructed feature value of the to-be-encoded region that is determined after entropy encoding processing on the to-be-encoded region is skipped, whether to skip entropy encoding processing on the to-be-encoded region; if yes, skipping entropy encoding processing on the to-be-encoded region, and setting a flag corresponding to the to-be-encoded region to a first value; or if no, performing entropy encoding processing on the to-be-encoded region based on the probability estimation result of the to-be-encoded region, and setting a flag corresponding to the to-be-encoded region to a second value; then determining a value probability of the flag based on the probability estimation result of the to-be-encoded region, where the value probability of the flag is a probability that the flag is the first value or a probability that the flag is the second value; and encoding the flag based on the value probability of the flag.

If a difference between the original feature value of the to-be-encoded region and the reconstructed feature value of the to-be-encoded region that is determined after entropy encoding processing on the to-be-encoded region is skipped is small, it indicates that skipping entropy encoding processing on the to-be-encoded region does not introduce an artifact into a reconstructed picture of the to-be-encoded region. In this case, entropy encoding processing on the to-be-encoded region may be skipped. If a difference between the original feature value of the to-be-encoded region and the reconstructed feature value of the to-be-encoded region that is determined after entropy encoding processing on the to-be-encoded region is skipped is large, it indicates that skipping entropy encoding processing on the to-be-encoded region introduces an artifact into a reconstructed picture of the to-be-encoded region. In this case, entropy encoding processing on the to-be-encoded region may not be skipped. This can effectively avoid introducing the artifact into the reconstructed picture.

In addition, skipping entropy encoding processing on the entire to-be-encoded region can improve entropy encoding skip processing efficiency, thereby improving encoding efficiency.

In addition, compared with writing the flag into a bitstream after flag binarization, encoding the flag based on the value probability of the flag can reduce bit rate overheads. The flag is encoded by using the probability estimation result that can be obtained by both an encoder and a decoder, so that the decoder decodes the bitstream to obtain the flag.

According to the third aspect, determining, based on the original feature value of the to-be-encoded region and the reconstructed feature value of the to-be-encoded region that is determined after entropy encoding processing on the to-be-encoded region is skipped, whether to skip entropy encoding processing on the to-be-encoded region includes: determining an error between the reconstructed feature value and the original feature value; and when the error is greater than an error threshold, determining to skip entropy encoding processing on the to-be-encoded region; or when the error is less than or equal to an error threshold, determining not to skip entropy encoding processing on the to-be-encoded region.

According to the third aspect or any one of the foregoing implementations of the third aspect, the to-be-encoded region includes a plurality of feature points, and the probability estimation result of the to-be-encoded region includes probability estimation results of the plurality of feature points in the to-be-encoded region; and determining the value probability of the flag based on the probability estimation result of the to-be-encoded region includes: determining the value probability of the flag based on a sum of the probability estimation results of the plurality of feature points in the to-be-encoded region.

According to the third aspect or any one of the foregoing implementations of the third aspect, the to-be-encoded region includes a plurality of feature points, and the probability estimation result of the to-be-encoded region includes probability estimation results of the plurality of feature points in the to-be-encoded region; and determining the value probability of the flag based on the probability estimation result of the to-be-encoded region includes: determining, based on the probability estimation result of the to-be-encoded region, a number of feature points on which entropy encoding processing is skipped in the to-be-encoded region; and determining the value probability of the flag based on the number of feature points on which entropy encoding processing is skipped in the to-be-encoded region and a total number of feature points in the to-be-encoded region.

According to the third aspect or any one of the foregoing implementations of the third aspect, determining, based on the probability estimation result of the to-be-encoded region, the number of feature points on which entropy encoding processing is skipped in the to-be-encoded region includes:
using a number of feature points whose probability estimation results satisfy a preset condition in the to-be-encoded region as the number of feature points on which entropy encoding processing is skipped in the to-be-encoded region.

The third aspect and any one of the implementations of the third aspect respectively correspond to the first aspect and any one of the implementations of the first aspect. For technical effect corresponding to the third aspect and any one of the implementations of the third aspect, refer to technical effect corresponding to the first aspect and any one of the implementations of the first aspect. Details are not described herein again.

According to a fourth aspect, this application further provides a decoding method. The method includes: first receiving a bitstream; then determining a probability estimation result of a to-be-decoded region in a feature map corresponding to the bitstream; then determining a value probability of a flag corresponding to the to-be-decoded region based on the probability estimation result of the to-be-decoded region, where the value probability of the flag is a probability that the flag is a first value or a probability that the flag is a second value; decoding the bitstream to obtain the flag based on the value probability of the flag; when the flag is the first value, setting a feature value of a feature point in the to-be-decoded region to a specific value; or when the flag is the second value, performing entropy decoding processing on the to-be-decoded region based on the probability estimation result of the to-be-decoded region, to obtain a feature value of a feature point in the to-be-decoded region; and then performing reconstruction based on a feature value of a feature point in the feature map, to obtain a reconstructed picture.

According to the fourth aspect, the to-be-decoded region includes a plurality of feature points, and the probability estimation result of the to-be-decoded region includes probability estimation results of the plurality of feature points in the to-be-decoded region; and determining the value probability of the flag corresponding to the to-be-decoded region based on the probability estimation result of the to-be-decoded region includes: determining the value probability of the flag based on a sum of the probability estimation results of the plurality of feature points in the to-be-decoded region.

According to the fourth aspect or any one of the foregoing implementations of the fourth aspect, the to-be-decoded region includes a plurality of feature points, and the probability estimation result of the to-be-decoded region includes probability estimation results of the plurality of feature points in the to-be-decoded region; and determining the value probability of the flag corresponding to the to-be-decoded region based on the probability estimation result of the to-be-decoded region includes: determining, based on the probability estimation result of the to-be-decoded region, a number of feature points on which entropy decoding processing is skipped in the to-be-decoded region; and determining the value probability of the flag based on the number of feature points on which entropy decoding processing is skipped in the to-be-decoded region and a total number of feature points in the to-be-decoded region.

According to the fourth aspect or any one of the foregoing implementations of the fourth aspect, determining, based on the probability estimation result of the to-be-decoded region, the number of feature points on which entropy decoding processing is skipped in the to-be-decoded region includes: using a number of feature points whose probability estimation results satisfy a preset condition in the to-be-decoded region as the number of feature points on which entropy decoding processing is skipped in the to-be-decoded region.

The fourth aspect and any one of the implementations of the fourth aspect respectively correspond to the first aspect and any one of the implementations of the first aspect. For technical effect corresponding to the fourth aspect and any one of the implementations of the fourth aspect, refer to technical effect corresponding to the first aspect and any one of the implementations of the first aspect. Details are not described herein again.

According to a fifth aspect, this application further provides an encoder. The encoder includes:
an obtaining module, configured to obtain a to-be-encoded picture;
a feature extraction module, configured to extract a feature map of the to-be-encoded picture;
a probability estimation module, configured to determine a probability estimation result of a to-be-encoded region in the feature map; and
an entropy encoding module, configured to: determine, based on an original feature value of the to-be-encoded region and a reconstructed feature value of the to-be-encoded region that is determined after adaptive entropy encoding skip processing is performed on the to-be-encoded region, whether to perform adaptive entropy encoding skip processing on the to-be-encoded region; if yes, perform entropy encoding processing on at least one sub-block in the to-be-encoded region or skip entropy encoding processing on the at least one sub-block based on the probability estimation result of the to-be-encoded region, and set a flag corresponding to the to-be-encoded region to a first value; or if no, perform entropy encoding processing on the to-be-encoded region based on the probability estimation result of the to-be-encoded region, and set a flag corresponding to the to-be-encoded region to a second value; and encode the flag.

It should be understood that the encoder may further perform the steps in the first aspect and any one of the implementations of the first aspect.

The fifth aspect and any one of the implementations of the fifth aspect respectively correspond to the first aspect and any one of the implementations of the first aspect. For technical effect corresponding to the fifth aspect and any one of the implementations of the fifth aspect, refer to technical effect corresponding to the first aspect and any one of the implementations of the first aspect. Details are not described herein again.

According to a sixth aspect, this application further provides a decoder. The decoder includes:
a receiving module, configured to receive a bitstream;
an entropy decoding module, configured to: determine a probability estimation result of a to-be-decoded region in a feature map corresponding to the bitstream, and decode the bitstream to obtain a flag corresponding to the to-be-decoded region; and when the flag is a first value, perform entropy decoding processing on at least one sub-block in the to-be-decoded region or set a feature value of a feature point in the at least one sub-block to a specific value based on the probability estimation result of the to-be-decoded region, to obtain a feature value of a feature point in the to-be-decoded region; or when the flag is a second value, perform entropy decoding processing on the to-be-decoded region based on the probability estimation result of the to-be-decoded region, to obtain a feature value of a feature point in the to-be-decoded region; and
a feature decoding module, configured to perform reconstruction based on a feature value of a feature point in the feature map, to obtain a reconstructed picture.

It should be understood that the decoder may further perform the steps in the second aspect and any one of the implementations of the second aspect.

The sixth aspect and any one of the implementations of the sixth aspect respectively correspond to the first aspect and any one of the implementations of the first aspect. For technical effect corresponding to the sixth aspect and any one of the implementations of the sixth aspect, refer to technical effect corresponding to the first aspect and any one of the implementations of the first aspect. Details are not described herein again.

According to a seventh aspect, this application further provides an encoder. The encoder includes:
an obtaining module, configured to obtain a to-be-encoded picture;
a feature extraction module, configured to extract a feature map of the to-be-encoded picture;
a probability estimation module, configured to determine a probability estimation result of a to-be-encoded region in the feature map; and
an entropy encoding module, configured to: determine, based on an original feature value of the to-be-encoded region and a reconstructed feature value of the to-be-encoded region that is determined after entropy encoding processing on the to-be-encoded region is skipped, whether to skip entropy encoding processing on the to-be-encoded region; if yes, skip entropy encoding processing on the to-be-encoded region, and set a flag corresponding to the to-be-encoded region to a first value; or if no, perform entropy encoding processing on the to-be-encoded region based on the probability estimation result of the to-be-encoded region, and set a flag corresponding to the to-be-encoded region to a second value; determine a value probability of the flag based on the probability estimation result of the to-be-encoded region, where the value probability of the flag is a probability that the flag is the first value or a probability that the flag is the second value; and encode the flag based on the value probability of the flag.

It should be understood that the encoder may further perform the steps in the third aspect and any one of the implementations of the third aspect.

The seventh aspect and any one of the implementations of the seventh aspect respectively correspond to the first aspect and any one of the implementations of the first aspect. For technical effect corresponding to the seventh aspect and any one of the implementations of the seventh aspect, refer to technical effect corresponding to the first aspect and any one of the implementations of the first aspect. Details are not described herein again.

According to an eighth aspect, this application further provides a decoder. The decoder includes: a receiving module, configured to receive a bitstream;
an entropy decoding module, configured to: determine a probability estimation result of a to-be-decoded region in a feature map corresponding to the bitstream; determine a value probability of a flag corresponding to the to-be-decoded region based on the probability estimation result of the to-be-decoded region, where the value probability of the flag is a probability that the flag is a first value or a probability that the flag is a second value; decode the bitstream to obtain the flag based on the value probability of the flag; and when the flag is the first value, set a feature value of a feature point in the to-be-decoded region to a specific value; or when the flag is the second value, perform entropy decoding processing on the to-be-decoded region based on the probability estimation result of the to-be-decoded region, to obtain a feature value of a feature point in the to-be-decoded region; and a feature decoding module, configured to perform reconstruction based on a feature value of a feature point in the feature map, to obtain a reconstructed picture.

It should be understood that the decoder may further perform the steps in the fourth aspect and any one of the implementations of the fourth aspect.

The eighth aspect and any one of the implementations of the eighth aspect respectively correspond to the first aspect and any one of the implementations of the first aspect. For technical effect corresponding to the eighth aspect and any one of the implementations of the eighth aspect, refer to technical effect corresponding to the first aspect and any one of the implementations of the first aspect. Details are not described herein again.

According to a ninth aspect, an embodiment of this application provides an electronic device, including a memory and a processor. The memory is coupled to the processor. The memory stores program instructions, and when the program instructions are executed by the processor, the electronic device is enabled to perform the steps in the first aspect (or the third aspect) or any possible implementation of the first aspect (or the third aspect).

The ninth aspect and any one of the implementations of the ninth aspect respectively correspond to the first aspect (or the third aspect) and any one of the implementations of the first aspect (or the third aspect). For technical effect corresponding to the ninth aspect and any one of the implementations of the ninth aspect, refer to technical effect corresponding to the first aspect (or the third aspect) and any one of the implementations of the first aspect (or the third aspect). Details are not described herein again.

According to a tenth aspect, an embodiment of this application provides an electronic device, including a memory and a processor. The memory is coupled to the processor. The memory stores program instructions, and when the program instructions are executed by the processor, the electronic device is enabled to perform the steps in the second aspect (or the fourth aspect) or any possible implementation of the second aspect (or the fourth aspect).

The tenth aspect and any one of the implementations of the tenth aspect respectively correspond to the second aspect (or the fourth aspect) and any one of the implementations of the second aspect (or the fourth aspect). For technical effect corresponding to the tenth aspect and any one of the implementations of the tenth aspect, refer to technical effect corresponding to the second aspect (or the fourth aspect) and any one of the implementations of the second aspect (or the fourth aspect). Details are not described herein again.

According to an eleventh aspect, an embodiment of this application provides a chip, including one or more interface circuits and one or more processors. The one or more processors receive or send data through the one or more interface circuits, and when the one or more processors execute computer instructions, an electronic device is enabled to perform the steps in the first aspect (or the third aspect) or any possible implementation of the first aspect (or the third aspect).

The eleventh aspect and any one of the implementations of the eleventh aspect respectively correspond to the first aspect (or the third aspect) and any one of the implementations of the first aspect (or the third aspect). For technical effect corresponding to the eleventh aspect and any one of the implementations of the eleventh aspect, refer to technical effect corresponding to the first aspect (or the third aspect) and any one of the implementations of the first aspect (or the third aspect). Details are not described herein again.

According to a twelfth aspect, an embodiment of this application provides a chip, including one or more interface circuits and one or more processors. The one or more processors receive or send data through the one or more interface circuits, and when the one or more processors execute computer instructions, an electronic device is enabled to perform the steps in the second aspect (or the fourth aspect) or any possible implementation of the second aspect (or the fourth aspect).

The twelfth aspect and any one of the implementations of the twelfth aspect respectively correspond to the second aspect (or the fourth aspect) and any one of the implementations of the second aspect (or the fourth aspect). For technical effect corresponding to the twelfth aspect and any one of the implementations of the twelfth aspect, refer to technical effect corresponding to the second aspect (or the fourth aspect) and any one of the implementations of the second aspect (or the fourth aspect). Details are not described herein again.

According to a thirteenth aspect, an embodiment of this application provides a computer-readable storage medium. The computer-readable storage medium stores a computer program, and when the computer program is run on a computer or a processor, the computer or the processor is enabled to perform the steps in the first aspect (or the third aspect) or any possible implementation of the first aspect (or the third aspect).

The thirteenth aspect and any one of the implementations of the thirteenth aspect respectively correspond to the first aspect (or the third aspect) and any one of the implementations of the first aspect (or the third aspect). For technical effect corresponding to the thirteenth aspect and any one of the implementations of the thirteenth aspect, refer to technical effect corresponding to the first aspect (or the third aspect) and any one of the implementations of the first aspect (or the third aspect). Details are not described herein again.

According to a fourteenth aspect, an embodiment of this application provides a computer-readable storage medium. The computer-readable storage medium stores a computer program, and when the computer program is run on a computer or a processor, the computer or the processor is enabled to perform the steps in the second aspect (or the fourth aspect) or any possible implementation of the second aspect (or the fourth aspect).

The fourteenth aspect and any one of the implementations of the fourteenth aspect respectively correspond to the second aspect (or the fourth aspect) and any one of the implementations of the second aspect (or the fourth aspect). For technical effect corresponding to the fourteenth aspect and any one of the implementations of the fourteenth aspect, refer to technical effect corresponding to the second aspect (or the fourth aspect) and any one of the implementations of the second aspect (or the fourth aspect). Details are not described herein again.

According to a fifteenth aspect, an embodiment of this application provides a computer program product. The computer program product includes computer instructions, and when the computer instructions are executed by a computer or a processor, the computer or the processor is enabled to perform the steps in the first aspect (or the third aspect) or any possible implementation of the first aspect (or the third aspect).

The fifteenth aspect and any one of the implementations of the fifteenth aspect respectively correspond to the first aspect (or the third aspect) and any one of the implementations of the first aspect (or the third aspect). For technical effect corresponding to the fifteenth aspect and any one of the implementations of the fifteenth aspect, refer to technical effect corresponding to the first aspect (or the third aspect) and any one of the implementations of the first aspect (or the third aspect). Details are not described herein again.

According to a sixteenth aspect, an embodiment of this application provides a computer program product. The computer program product includes computer instructions, and when the computer instructions are executed by a computer or a processor, the computer or the processor is enabled to perform the steps in the second aspect (or the fourth aspect) or any possible implementation of the second aspect (or the fourth aspect).

The sixteenth aspect and any one of the implementations of the sixteenth aspect respectively correspond to the second aspect (or the fourth aspect) and any one of the implementations of the second aspect (or the fourth aspect). For technical effect corresponding to the sixteenth aspect and any one of the implementations of the sixteenth aspect, refer to technical effect corresponding to the second aspect (or the fourth aspect) and any one of the implementations of the second aspect (or the fourth aspect). Details are not described herein again.

According to a seventeenth aspect, an embodiment of this application provides a bitstream storage apparatus. The apparatus includes a receiver and at least one storage medium. The receiver is configured to receive a bitstream. The at least one storage medium is configured to store the bitstream. The bitstream is generated according to the first aspect (or the third aspect) and any one of the implementations of the first aspect (or the third aspect).

The seventeenth aspect and any one of the implementations of the seventeenth aspect respectively correspond to the first aspect (or the third aspect) and any one of the implementations of the first aspect (or the third aspect). For technical effect corresponding to the seventeenth aspect and any one of the implementations of the seventeenth aspect, refer to technical effect corresponding to the first aspect (or the third aspect) and any one of the implementations of the first aspect (or the third aspect). Details are not described herein again.

According to an eighteenth aspect, an embodiment of this application provides a bitstream transmission apparatus. The apparatus includes a transmitter and at least one storage medium. The at least one storage medium is configured to store a bitstream. The bitstream is generated according to the first aspect (or the third aspect) and any one of the implementations of the first aspect (or the third aspect). The transmitter is configured to obtain the bitstream from the storage medium, and send the bitstream to a terminal-side device through the transmission medium.

The eighteenth aspect and any one of the implementations of the eighteenth aspect respectively correspond to the first aspect (or the third aspect) and any one of the implementations of the first aspect (or the third aspect). For technical effect corresponding to the eighteenth aspect and any one of the implementations of the eighteenth aspect, refer to technical effect corresponding to the first aspect (or the third aspect) and any one of the implementations of the first aspect (or the third aspect). Details are not described herein again.

According to a nineteenth aspect, an embodiment of this application provides a bitstream delivery system. The system includes: at least one storage medium, configured to store at least one bitstream, where the at least one bitstream is generated according to the first aspect (or the third aspect) and any one of the implementations of the first aspect (or the third aspect); and a streaming media device, configured to obtain a target bitstream from the at least one storage medium, and send the target bitstream to a terminal-side device, where the streaming media device includes a content server or a content delivery server.

The nineteenth aspect and any one of the implementations of the nineteenth aspect respectively correspond to the first aspect (or the third aspect) and any one of the implementations of the first aspect (or the third aspect). For technical effect corresponding to the nineteenth aspect and any one of the implementations of the nineteenth aspect, refer to technical effect corresponding to the first aspect (or the third aspect) and any one of the implementations of the first aspect (or the third aspect). Details are not described herein again.

### BRIEF DESCRIPTION OF DRAWINGS

FIG. 1a is a diagram of an example application scenario;
FIG. 1b is a diagram of an example application scenario;
FIG. 1c is a diagram of an example end-to-end picture compression process;
FIG. 2 is a diagram of an example encoding process;
FIG. 3 is a diagram of an example decoding process;
FIG. 4 is a diagram of an example end-to-end picture compression process;
FIG. 5a is a diagram of an example encoding process;
FIG. 5b is a diagram of an example structure of a side information extraction module;
FIG. 5c is a diagram of an example structure of a probability estimation module;
FIG. 6 is a diagram of an example decoding process;
FIG. 7 is a diagram of an example end-to-end picture compression process;
FIG. 8 is a diagram of an example encoding process;
FIG. 9 is a diagram of an example decoding process;
FIG. 10 is a diagram of an example machine vision task based on encoding and decoding; and
FIG. 11 is a diagram of an example structure of an apparatus.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

A term "and/or" in this specification describes only an association relationship between associated objects and represents that three relationships may exist. For example, A and/or B may represent the following three cases: Only A exists, both A and B exist, and only B exists.

In this specification and the claims in embodiments of this application, terms "first", "second", and the like are intended to distinguish between different objects but do not indicate a particular order of the objects. For example, a first target object, a second target object, and the like are used to distinguish between different target objects, but are not used to describe a specific order of the target objects.

In embodiments of this application, a word such as "example" or "for example" indicates an example, an instance, or descriptions. Any embodiment or design solution described as an "example" or "for example" in embodiments of this application should not be explained as being more preferred or having more advantages than another embodiment or design solution. Exactly, use of the word such as "example" or "for example" is intended to present a related concept in a specific manner.

In descriptions of embodiments of this application, "a plurality of" means two or more, unless otherwise specified. For example, a plurality of processing units mean two or more processing units, and a plurality of systems mean two or more systems.

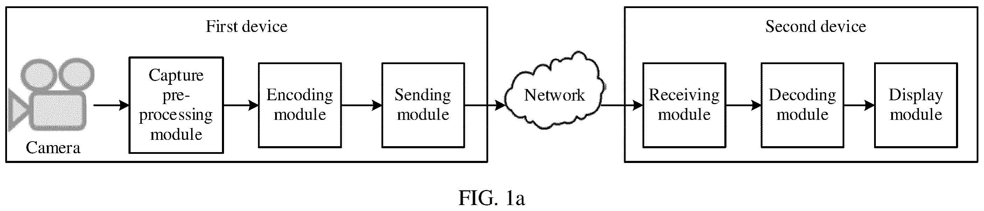

FIG. 1a is a diagram of an example application scenario. The application scenario in FIG. 1a is various video service scenarios based on video encoding and decoding, for example, a video conference scenario, a video call scenario, an online education scenario, a remote tutor scenario, a low-latency live streaming scenario, a cloud game scenario, a wireless screen projection scenario, and a wireless extended screen scenario. This is not limited in embodiments of this application.

As shown in FIG. 1a, for example, a first device may include a video collection module (for example, a camera), a collection pre-processing module, an encoding module (or an encoder), and a sending module. For example, the encoding module may be a software module, or may be a hardware module. This is not limited in embodiments of this application. It should be understood that FIG. 1a is merely an example of the first device. In some other embodiments of this application, the first device has more modules than those shown in FIG. 1a. This is not limited in embodiments of this application.

As shown in FIG. 1a, for example, a second device may include a display module, a decoding module (or a decoder), and a receiving module. For example, the decoding module may be a software module, or may be a hardware module. This is not limited in embodiments of this application. It should be understood that FIG. 1a is merely an example of the second device. In some other embodiments of this application, the second device has more modules than those shown in FIG. 1a. This is not limited in embodiments of this application.

Still as shown in FIG. 1a, for example, a process in which the camera of the first device collects original video data and then sends the collected original video data to the second device for display is as follows: The video collection module collects the original video data and then inputs the original video data to the collection pre-processing module. The collection pre-processing module performs a series of pre-processing operations on the original video data and outputs pre-processed original video data to the encoding module. Next, the encoding module may encode the pre-processed original video data to obtain a bitstream (the bitstream may also be referred to as a bit stream or a code stream), and output the bitstream obtained through encoding to the sending module. Then, the sending module may send the bitstream to the second device. Subsequently, the receiving module of the second device may receive the bitstream, and then output the bitstream to the decoding module. Then, the decoding module may decode the bitstream to obtain reconstructed video data and output the reconstructed video data to the display module. The display module renders and displays the reconstructed video data.

For example, the first device includes but is not limited to a server, a personal computer (Personal Computer, PC), a notebook computer, a tablet computer, a mobile phone, and a watch.

For example, the second device includes but is not limited to a PC, a notebook computer, a tablet computer, a mobile phone, and a watch.

For example, in the video conference scenario, the first device may be a PC or a notebook computer, and the second device may be a PC or a notebook computer.

For example, in the online education scenario, the first device may be a PC or a notebook computer, and the second device may be a tablet computer.

For example, in the cloud game scenario, the first device may be a server, and the second device may be a tablet computer, a PC, a notebook computer, or a mobile phone.

It should be understood that this application may alternatively be applied to a picture encoding and decoding scenario. This is not limited in this application.

It should be understood that the sending module of the first device may alternatively directly send the bitstream to the receiving module of the second device without a network. This is not limited in this application.

It should be understood that the bitstream obtained through encoding may alternatively be directly stored.

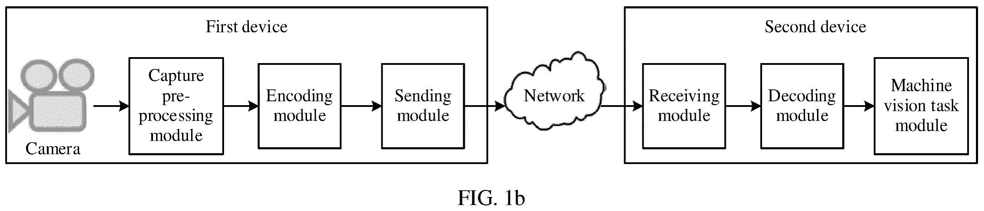

FIG. 1b is a diagram of an example application scenario. The application scenario in FIG. 1b is a machine vision task (Computer vision task) based on video (or picture) encoding and decoding. The machine vision task includes but is not limited to object classification, recognition, segmentation, and the like. This is not limited in this application.

For a first device in FIG. 1b, refer to the descriptions of the first device in FIG. 1a. Details are not described herein again.

As shown in FIG. 1b, for example, a second device may include a receiving module, a decoding module (or a decoder), and a machine vision task module. The machine vision task module may be configured to execute a machine vision task.

Still as shown in FIG. 1b, for example, a process in which the camera of the first device collects original video data and then sends the collected original video data to the second device to execute a machine vision task is as follows: The video collection module collects the original video data and then inputs the original video data to the collection pre-processing module. The collection pre-processing module performs a series of pre-processing operations on the original video data and outputs pre-processed original video data to the encoding module. Next, the encoding module may encode the pre-processed original video data to obtain a bitstream (the bitstream may also be referred to as a bit stream or a code stream), and output the bitstream obtained through encoding to the sending module. Then, the sending module may send the bitstream to the second device. Subsequently, the receiving module of the second device may receive the bitstream and then output the bitstream to the decoding module. Next, the decoding module may decode the bitstream, and output a feature obtained in a decoding process to the machine vision task module. Then, the machine vision task module may execute the machine vision task based on the feature obtained in the decoding process, to obtain a machine vision task result.

For example, the first device includes but is not limited to a server, a personal computer (Personal Computer, PC), a notebook computer, a tablet computer, a mobile phone, and a watch.

For example, the second device includes but is not limited to a PC, a notebook computer, a tablet computer, a mobile phone, and a watch.

It should be understood that the sending module of the first device may alternatively directly send the bitstream to the receiving module of the second device without a network. This is not limited in this application.

It should be understood that this application may alternatively be applied to another service scenario based on video (or picture) encoding and decoding. This is not limited in this application.

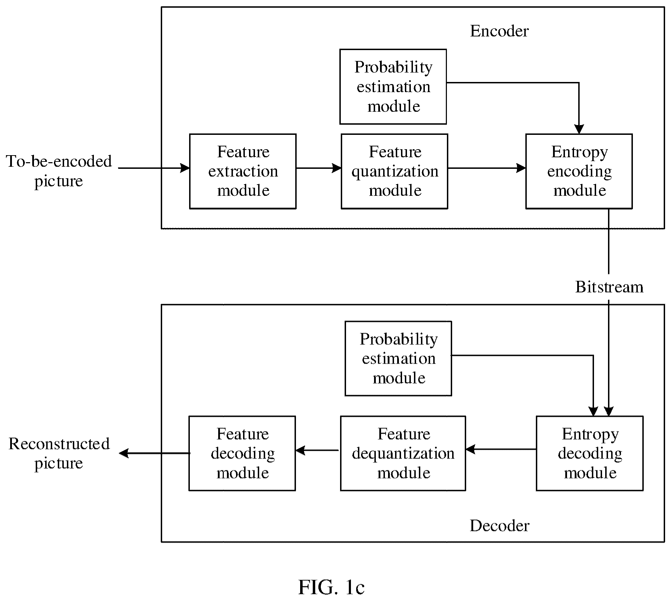

FIG. 1c is a diagram of an example end-to-end picture compression process.

As shown in FIG. 1c, for example, an encoder may include a feature extraction module, a feature quantization module, a probability estimation module, and an entropy encoding module. It should be understood that the encoder may alternatively include more or fewer modules than those shown in FIG. 1c. This is not limited in this application.

For example, the feature extraction module may be configured to perform feature extraction. For example, the feature quantization module may be configured to perform quantization. For example, the entropy encoding module may be configured to perform entropy encoding processing (for example, Huffman coding (Huffman Coding, HC), arithmetic coding (Arithmetic Coding, AC), and asymmetric numeral system (Asymmetric Numeral System, ANS)). For example, the probability estimation module may be configured to perform probability estimation.

As shown in FIG. 1c, for example, a decoder may include a feature decoding module, a feature dequantization module, a probability estimation module, and an entropy decoding module. It should be understood that the decoder may alternatively include more or fewer modules than those shown in FIG. 1c. This is not limited in this application. The feature dequantization module is an optional module.

For example, the entropy decoding module may be configured to perform entropy decoding processing. For example, the feature dequantization module may be configured to perform dequantization. For example, the feature decoding module may be configured to perform feature decoding to obtain a reconstructed picture. For example, the probability estimation module may be configured to perform probability estimation.

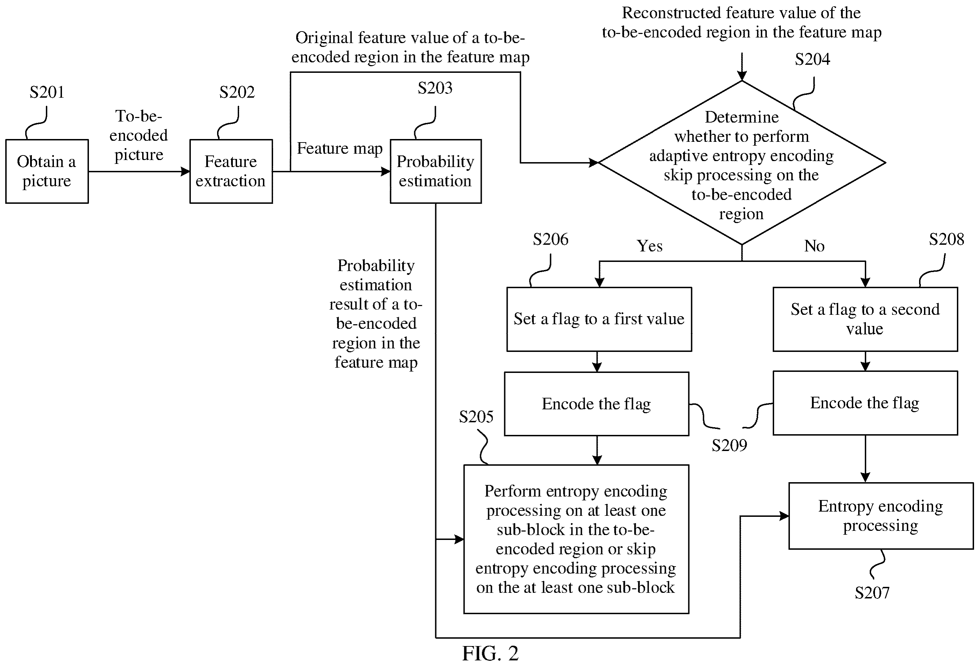

FIG. 2 is a diagram of an example encoding process. FIG. 2 shows the encoding process on the basis of FIG. 1a and FIG. 1c. In the embodiment in FIG. 2, an example of encoding one picture is used for description. The picture may be an independent picture, or may be one frame in a video. This is not limited in this application. Steps S201 to S209 all are steps in the encoding process of the encoder.

S201: Obtain a to-be-encoded picture.

S202: Extract a feature map of the to-be-encoded picture.

For example, after the encoder obtains the to-be-encoded picture, the feature extraction module may extract a feature of the to-be-encoded picture, to obtain the feature map of the to-be-encoded picture.

For example, the feature extraction module may be implemented based on a neural network. For example, the feature extraction module may be implemented based on a convolutional neural network (Convolutional Neural Network, CNN). The CNN may be a neural network including a convolutional layer, and the neural network may further include a network layer such as an activation layer (such as ReLU or PReLU), a pooling layer (pooling layer), a batch normalization layer (BN layer), or a fully connected layer (Fully Connected layer). Conventional convolutional neural networks include LeNet, AlexNet, VGGNet, ResNet, and the like. For example, a basic CNN may include a backbone network (backbone network) and a head network (head network); and a complex CNN includes a backbone network, a neck network (neck network), and a head network (head network). A network included in the CNN is not limited in this application.

For example, the feature extraction module may be implemented through multi-layer convolution stacking and combination with a non-linear mapping activation function.

For example, the feature map (feature map) is three-dimensional data that is output by the convolutional layer, the activation layer, the pooling layer, or the batch normalization layer in the convolutional neural network, and three dimensions are respectively referred to as a width (Width), a height (Height), and a channel (Channel). For example, the feature map may include W*H*C feature points, and each feature point has a corresponding feature value. For example, the feature value may be a floating point number, where W, H, and C are all positive integers.

Then, the feature quantization module may quantize the feature map. It should be noted that the feature map in S203 to S209 may be a quantized feature map.

For example, the feature map may be divided into a plurality of regions; then each region is determined as one to-be-encoded region in sequence; and then S203 to S209 are performed for the to-be-encoded region, to encode the to-be-encoded region. The following uses one to-be-encoded region as an example for description. The to-be-encoded region may be a two-dimensional region, or may be a three-dimensional region. The to-be-encoded region may include one or more feature points. This is not limited in this application.

S203: Determine a probability estimation result of the to-be-encoded region in the feature map.

For example, the probability estimation module may perform probability estimation on each feature point in the feature map, and determine a probability estimation result of each feature point in the feature map, so that the probability estimation result of the to-be-encoded region in the feature map can be obtained. The probability estimation result of the to-be-encoded region may include probability estimation results of all feature points in the to-be-encoded region. A probability estimation process is described subsequently.

S204: Determine, based on an original feature value of the to-be-encoded region and a reconstructed feature value of the to-be-encoded region that is determined after adaptive entropy encoding skip processing is performed on the to-be-encoded region, whether to perform adaptive entropy encoding skip processing on the to-be-encoded region.

For example, the reconstructed feature value of the to-be-encoded region may be first determined if adaptive entropy encoding skip processing is performed on the to-be-encoded region; and then the reconstructed feature value of the to-be-encoded region is compared with the original feature value to determine whether to perform adaptive entropy encoding skip processing on the to-be-encoded region.

For example, it may be determined, through comparison between the reconstructed feature value and the original feature value of the to-be-encoded region, whether an artifact is introduced after adaptive entropy encoding skip processing is performed on the to-be-encoded region. When it is determined, based on a result of comparison between the reconstructed feature value and the original feature value of the to-be-encoded region, that an artifact is introduced after adaptive entropy encoding skip processing is performed on the to-be-encoded region, adaptive entropy encoding skip processing may not be performed on the to-be-encoded region. In this case, S207, S208, and S209 may be performed. When it is determined, based on a result of comparison between the reconstructed feature value and the original feature value of the to-be-encoded region, that no artifact is introduced after adaptive entropy encoding skip processing is performed on the to-be-encoded region, adaptive entropy encoding skip processing may be performed on the to-be-encoded region. In this case, S205, S206, and S209 may be performed. A specific determining manner is described subsequently. This can avoid introducing an artifact into a reconstructed picture.

The original feature value of the to-be-encoded region may include original feature values of a plurality of feature points included in the to-be-encoded region, and the reconstructed feature value of the to-be-encoded region may include reconstructed feature values of the plurality of feature points included in the to-be-encoded region.

S205: Perform entropy encoding processing on at least one sub-block in the to-be-encoded region or skip entropy encoding processing on the at least one sub-block based on the probability estimation result of the to-be-encoded region.

For example, the to-be-encoded region may include a plurality of feature points, and at least one feature point may be grouped into one sub-block. In this way, the to-be-encoded region may be divided into a plurality of sub-blocks, and each sub-block may include at least one feature point. The probability estimation result of the to-be-encoded region may include probability estimation results of the plurality of sub-blocks, and the probability estimation result of each sub-block may include a probability estimation result of a feature point included in the sub-block. For example, adaptive entropy encoding skip processing may be: performing entropy encoding processing on the at least one sub-block in the to-be-encoded region or skipping entropy encoding processing on the at least one sub-block based on the probability estimation result of the to-be-encoded region. In this way, adaptive entropy encoding skip processing may be performed on the to-be-encoded region by using a sub-block as a minimum unit, thereby improving encoding efficiency and reducing bit rate overheads.

Specifically, for each sub-block, it is determined, based on the probability estimation result of the sub-block, whether to skip entropy encoding processing on the sub-block; and when it is determined not to skip entropy encoding processing on the sub-block, entropy encoding processing is performed on a feature value of a feature point in the sub-block based on a probability estimation result of the feature point in the sub-block; or when it is determined to skip entropy encoding processing on the sub-block, entropy encoding processing on all feature points in the sub-block is skipped; and after entropy encoding processing on all the feature points in the sub-block is skipped, feature values of all the feature points in the sub-block are set to a specific value (to facilitate determining of a reconstructed picture of the to-be-encoded region).

It should be understood that, when the sub-block includes only one feature point, adaptive entropy encoding skip processing is performed by using a feature point as a minimum unit. In this case, adaptive entropy encoding skip processing may be: performing entropy encoding processing on at least one feature point in the to-be-encoded region or skipping entropy encoding processing on the at least one feature point based on the probability estimation result of the to-be-encoded region. In this way, the to-be-encoded region can be encoded by using a feature point as a minimum unit. Compared with encoding the to-be-encoded region by using a sub-block as a minimum unit, this can improve reconstruction quality.

S206: Set a flag corresponding to the to-be-encoded region to a first value.

For example, when it is determined to perform adaptive entropy encoding skip processing on the to-be-encoded region in the feature map, the flag (for example, which may be represented by a skip flag, a flag, or a cube flag) corresponding to the to-be-encoded region may be set to the first value; and then S209 is performed, that is, the flag is encoded. In this way, the flag may be transferred to the decoder, so that the decoder learns whether to perform adaptive entropy decoding skip processing on a corresponding to-be-decoded region. The first value may be set as required, for example, 1.

Based on the probability estimation result of the to-be-encoded region, after adaptive entropy encoding skip processing is performed on the to-be-encoded region, a bitstream of the to-be-encoded region (that is, a bitstream obtained through adaptive entropy encoding skip processing) may be obtained.

It should be noted that, as shown in FIG. 2, S209 is performed after S206, and S205 is performed after S209. It should be understood that, in this application, alternatively, S205 may be performed first, then S206 is performed, and then S209 is performed. In other words, this application does not limit a sequence of encoding the flag and performing adaptive entropy encoding skip processing on the to-be-encoded region. In this application, an example in which S209 is performed after S206, and S205 is performed after S209 is used for description.

S207: Perform entropy encoding processing on the to-be-encoded region based on the probability estimation result of the to-be-encoded region.

For example, when it is determined not to perform adaptive entropy encoding skip processing on the to-be-encoded region in the feature map, entropy encoding processing may be performed on each feature point in the to-be-encoded region based on the probability estimation result of each feature point in the to-be-encoded region, to obtain a bitstream (that is, a bitstream obtained through entropy encoding processing) of the to-be-encoded region.

S208: Set a flag corresponding to the to-be-encoded region to a second value.

For example, when it is determined not to perform adaptive entropy encoding skip processing on the to-be-encoded region in the feature map, the flag may be set to the second value; and then S209 is performed, that is, the flag is encoded. In this way, the flag may be transferred to the decoder, so that the decoder learns whether to perform adaptive entropy decoding skip processing on a corresponding to-be-decoded region. The second value may be set as required, for example, 0.

It should be noted that the first value and the second value are different.

It should be noted that, as shown in FIG. 2, S209 is performed after S208, and S207 is performed after S209. It should be understood that, in this application, alternatively, S207 may be performed first, then S208 is performed, and then S209 is performed. In other words, this application does not limit a sequence of encoding the flag and performing entropy encoding processing on the to-be-encoded region. In this application, an example in which S209 is performed after S208, and S207 is performed after S209 is used for description.

S209: Encode the flag.

In a possible manner, the flag may be encapsulated as a syntax element into the bitstream generated through entropy encoding skip processing or the bitstream generated through entropy encoding processing.

In a possible manner, the flag may be encoded to obtain a bitstream of the flag; and bitstreams of all to-be-encoded regions in the feature map and bitstreams of corresponding flags may form a bitstream of the to-be-encoded picture.

It should be understood that there may be a plurality of flag encoding manners. This is not limited in this application. Details are described subsequently.

For example, S204 to S209 may be performed by the entropy encoding module.

For example, after all the to-be-encoded regions in the feature map are encoded according to S203 to S209, the bitstream of the to-be-encoded picture may be obtained.

For example, this application provides a bitstream storage apparatus. The apparatus includes a receiver and at least one storage medium. The receiver is configured to receive a bitstream generated according to the encoding method in Embodiment 2; and the at least one storage medium is configured to store the bitstream.

For example, this application provides a bitstream transmission apparatus. The apparatus includes a transmitter and at least one storage medium. The at least one storage medium is configured to store a bitstream generated according to the encoding method in Embodiment 2; and the transmitter is configured to obtain the bitstream from the storage medium and send the bitstream to a terminal-side device through a transmission medium.

For example, this application provides a bitstream delivery system. The system includes: at least one storage medium, configured to store at least one bitstream generated according to the encoding method in Embodiment 2; and a streaming media device, configured to obtain a target bitstream from the at least one storage medium and send the target bitstream to a terminal-side device, where the streaming media device includes a content server or a content delivery server.

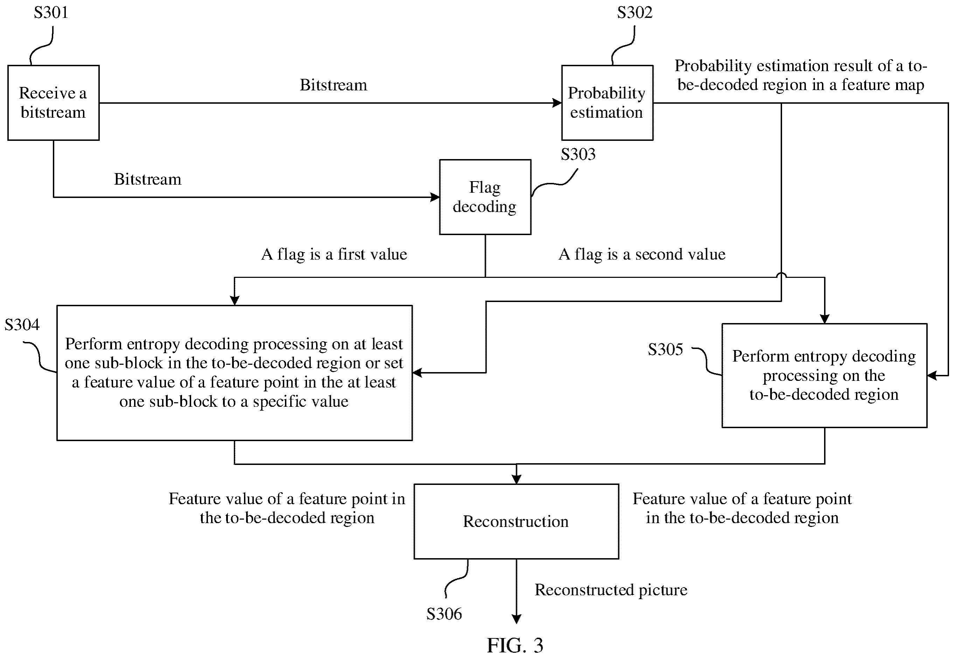

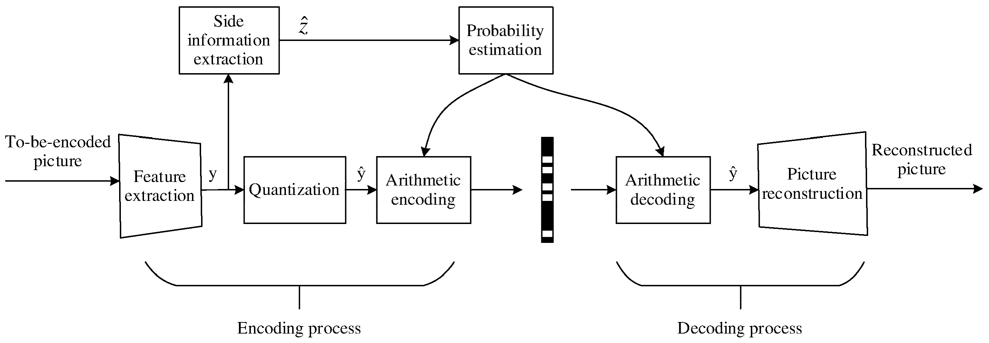

FIG. 3 is a diagram of an example decoding process. FIG. 3 shows the decoding process on the basis of FIG. 1a and FIG. 1c. The decoding process in FIG. 3 corresponds to the encoding process in FIG. 2.

S301: Receive a bitstream.

For example, a feature map corresponding to the bitstream may be divided into a plurality of regions; then each region is determined as one to-be-decoded region in sequence; and then S302 to S306 are performed for the to-be-decoded region, to decode the to-be-decoded region. The following uses one to-be-decoded region as an example for description. The to-be-decoded region may be a two-dimensional region, or may be a three-dimensional region. The to-be-decoded region may include one or more feature points. It should be understood that the feature map is divided into the plurality of regions in a consistent manner in the decoding process and the encoding process.

S302: Determine a probability estimation result of the to-be-decoded region in the feature map corresponding to the bitstream.

For example, the probability estimation module may perform probability estimation on each feature point in the feature map, and determine a probability estimation result of each feature point in the feature map, so that the probability estimation result of the to-be-decoded region in the feature map can be obtained. The probability estimation result of the to-be-decoded region may include probability estimation results of all feature points in the to-be-decoded region.

It should be understood that a process of S302 corresponds to that of S203, and details are described subsequently.

S303: Decode the bitstream to obtain a flag corresponding to the to-be-decoded region.

For example, the decoder may decode the bitstream to obtain the flag corresponding to the to-be-decoded region.

It should be noted that, in a possible manner, S302 may be performed first, and then S303 is performed. In this case, an implementation of S303 may be: decoding the bitstream to obtain the flag corresponding to the to-be-decoded region based on the probability estimation result of the to-be-decoded region. In a possible manner, S302 and S303 may be performed in parallel. In this case, an implementation of S303 may be: reading the flag corresponding to the to-be-decoded region from the bitstream. Specifically, this is determined according to a flag encoding manner, and details are described subsequently.

S304: When the flag is a first value, perform entropy decoding processing on at least one sub-block in the to-be-decoded region or set a feature value of a feature point in the at least one sub-block to a specific value based on the probability estimation result of the to-be-decoded region, to obtain a feature value of a feature point in the to-be-decoded region.

For example, when the flag corresponding to the to-be-decoded region is the first value, it may be determined that the encoder has performed adaptive entropy encoding skip processing on the to-be-decoded region. Therefore, the decoder may perform adaptive entropy decoding skip processing on the to-be-decoded region based on the probability estimation result of the to-be-decoded region, to obtain the feature value of the feature point in the to-be-decoded region.

For example, adaptive entropy decoding skip processing may be: performing entropy decoding processing on the at least one sub-block in the to-be-decoded region or setting the feature value of the feature point in the at least one sub-block to the specific value based on the probability estimation result of the to-be-decoded region, to obtain the feature value of the feature point in the to-be-decoded region.

Specifically, the to-be-decoded region may include a plurality of feature points, and at least one feature point may be grouped into one sub-block. In this way, the to-be-decoded region may be divided into a plurality of sub-blocks, and each sub-block may include at least one feature point. The probability estimation result of the to-be-decoded region includes probability estimation results of the plurality of sub-blocks, and the probability estimation result of each sub-block may include probability estimation results of all feature points included in the sub-block. For each sub-block, it is determined, based on the probability estimation result of the sub-block, whether to skip entropy decoding processing on the sub-block; and when it is determined not to skip entropy decoding processing on the sub-block, entropy decoding processing may be performed on all the feature points in the sub-block based on the probability estimation result of the sub-block, to obtain feature values of all the feature points in the sub-block; or when it is determined to skip entropy decoding processing on the sub-block, entropy decoding processing on the feature points may be skipped, and feature values of all the feature points in the sub-block are set to a specific value. In this way, adaptive entropy decoding skip processing may be performed on the to-be-decoded region by using a sub-block as a minimum unit, thereby improving decoding efficiency.

It should be understood that, when the sub-block includes only one feature point, adaptive entropy decoding skip processing is performed by using a feature point as a minimum unit. In this case, adaptive entropy decoding skip processing may be: performing entropy decoding processing on at least one feature point in the to-be-decoded region or skipping entropy decoding processing on the at least one feature point based on the probability estimation result of the to-be-decoded region. In this way, the to-be-decoded region can be decoded by using a feature point as a minimum unit. Compared with decoding the to-be-decoded region by using a sub-block as a minimum unit, this can improve reconstruction quality.

S305: When the flag is a second value, perform entropy decoding processing on the to-be-decoded region based on the probability estimation result of the to-be-decoded region, to obtain a feature value of a feature point in the to-be-decoded region.

For example, when the flag corresponding to the to-be-decoded region is the second value, it may be determined that the encoder has performed entropy encoding processing on the to-be-decoded region. Therefore, the decoder may perform entropy decoding processing on each feature point in the to-be-decoded region based on the probability estimation result of each feature point in the to-be-decoded region, to obtain a feature value of each feature point in the to-be-decoded region.

For example, S302 to S305 may be performed by the entropy decoding module.

S306: Perform reconstruction based on a feature value of a feature point in the feature map, to generate a reconstructed picture.

In this way, after S302 to S305 are performed for all to-be-decoded regions in the feature map, feature values of all feature points in the feature map may be obtained. Next, the feature dequantization module may dequantize the feature values of all the feature points in the feature map; and then the feature decoding module may perform reconstruction based on dequantized feature values of all the feature points in the feature map, to obtain the reconstructed picture.

For example, the feature decoding module may be implemented based on a neural network. For example, the feature decoding module may be implemented based on a convolutional neural network.

The following describes encoding and decoding processes in detail.

FIG. 4 is a diagram of an example end-to-end picture compression process.

As shown in FIG. 4, for example, an encoding process may include feature extraction, quantization, side information extraction, probability estimation, and arithmetic encoding. Feature extraction in FIG. 4 may be performed by the feature extraction module in FIG. 1c; quantization in FIG. 4 may be performed by the feature quantization module in FIG. 1c; probability estimation in FIG. 4 may be performed by the probability estimation module of the encoder in FIG. 1c; and arithmetic encoding in FIG. 4 may be performed by the entropy encoding module in FIG. 1c.

For example, the encoder may further include a side information extraction module, configured to perform side information extraction.

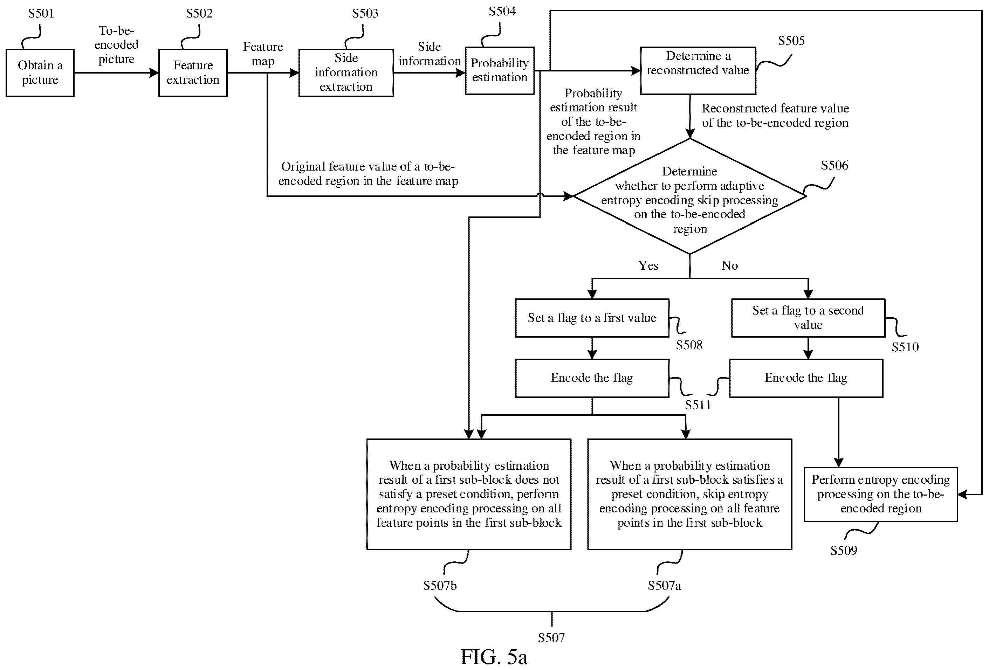

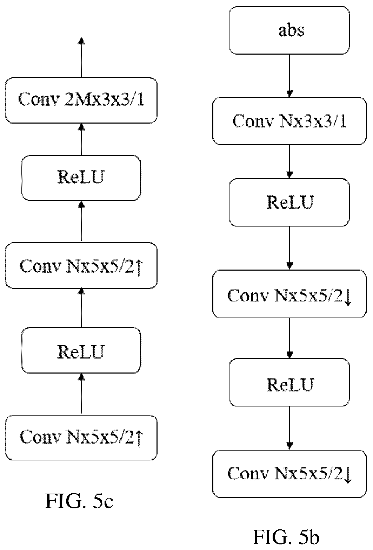

As shown in FIG. 4, for example, a feature map y is obtained after the feature extraction module performs feature extraction on a to-be-encoded picture. A feature map *ŷ* is obtained after the feature map y is quantized by the feature quantization module. In addition, after the side information extraction module performs side information extraction on the feature map y, side information *ẑ* is obtained and output to the probability estimation module, and the probability estimation module performs probability estimation based on the side information *ẑ*, to obtain a probability estimation result of the feature map y (that is, a probability estimation result of the feature map *ŷ*). Then, the entropy encoding module may perform arithmetic encoding on the feature map *ŷ* based on the probability estimation result of the feature map *ŷ* (for details, refer to descriptions in FIG. 5), to obtain a bitstream.

For example, the side information extraction module may alternatively perform side information extraction on the feature map *ŷ*, to obtain the side information *ẑ*. This is not limited in this application.

For example, after the side information *ẑ* is obtained, the side information *ẑ* may be further written into the bitstream, so that a probability estimation module of a decoder performs probability estimation.

As shown in FIG. 4, for example, a decoding process may include arithmetic decoding, probability estimation, and picture reconstruction. Arithmetic decoding in FIG. 4 may be performed by the entropy decoding module in FIG. 1c; picture reconstruction in FIG. 4 may be performed by the feature decoding module in FIG. 1c; and probability estimation in FIG. 4 may be performed by the probability estimation module of the decoder in FIG. 1c.

As shown in FIG. 4, for example, the decoder may parse the bitstream to obtain the side information *ẑ*, perform probability estimation based on the side information *ẑ*, and determine the probability estimation result of the feature map *ŷ*. Next, arithmetic decoding may be performed based on the probability estimation result of the feature map *ŷ,* to obtain the feature map *ŷ*. Then, picture reconstruction is performed based on the feature map *ŷ*, to obtain a reconstructed picture.

The following describes the encoding and decoding processes in detail on the basis of FIG. 4.

FIG. 5a is a diagram of an example encoding process. FIG. 5a shows the encoding process on the basis of FIG. 4.

S501: Obtain a to-be-encoded picture.

S502: Extract a feature map of the to-be-encoded picture.

For example, a feature map extracted by the feature extraction module for the to-be-encoded picture may be referred to as a feature map y.

S503: Extract side information of the feature map.

In a possible manner, the feature map y may be input to the side information extraction module, and the side information extraction module extracts side information of each feature point *y*[*w*][*h*][*c*] in the feature map y, to obtain side information *ẑ*, where W is an integer between 1 and W, *h* is an integer between 1 and H, and C is an integer between 1 and C.

In a possible manner, the feature map y may be quantized first to obtain a feature map *ŷ*; and then the feature map *ŷ* is input to the side information extraction module, and the side information extraction module extracts side information of each feature point *ŷ*[*w*][*h*][*c*] in the feature map *ŷ*, to obtain side information *ẑ.*

FIG. 5b is a diagram of an example structure of a side information extraction module. As shown in FIG. 5b, for example, the side information extraction module may be a neural network, and may include abs (absolute value function), a Conv (convolutional) layer, and a ReLU (activation) layer. Conv N×3×3/1 indicates that a convolutional kernel size of the convolutional layer is N×3×3, and a convolutional stride is 1. Conv N×5×5/2 indicates that a convolutional kernel size of the convolutional layer is N×5×5, and a convolutional stride is 2.

It should be understood that FIG. 5b is merely an example of the side information extraction module. The side information extraction module in this application may include more or fewer network layers/activation layers than those shown in FIG. 5b. This is not limited in this application. In addition, the convolutional kernel size and the convolutional stride of the convolutional layer are not limited in this application. In addition, the side information extraction module in this application may further include another network layer. This is not limited in this application either.

S504: Perform probability estimation based on the side information, and determine a probability estimation result of a to-be-encoded region in the feature map.

For example, the probability estimation module may perform probability estimation on each feature point *y*[*w*][*h*][*c*] in the feature map y based on the side information of each feature point *y*[*w*][*h*][*c*] in the feature map y, to obtain a probability estimation result of each feature point *y*[*w*][*h*][*c*] in the feature map y, and further obtain the probability estimation result of the to-be-encoded region.

In a possible manner, the probability estimation result of each feature point may be a probability P.

In a possible manner, when the probability estimation module performs Gaussian distribution estimation, the probability estimation result may include a Gaussian distribution parameter: a mean *µ* and a variance σ.

FIG. 5c is a diagram of an example structure of a probability estimation module. As shown in FIG. 5c, for example, the probability estimation module may be a neural network, and may include a Conv (convolutional) layer and a ReLU (activation) layer. Conv 2M×3×3/1 indicates that a convolutional kernel size of the convolutional layer is 2M×3×3, and a convolutional stride is 1. Conv N×5×5/2 indicates that a convolutional kernel size of the convolutional layer is N×5×5, and a convolutional stride is 2.

For example, the feature map *ŷ* may be divided into a plurality of cubes (cube) by using w1×h1×c1 as a basic unit (w1 is an integer between 1 and W, h1 is an integer between 1 and H, and c1 is an integer between 1 to C). When c1=1, one cube means one block.

The following uses an example in which one to-be-encoded region is one cube for description. For each cube, it is determined, based on a probability estimation result of the cube, whether to perform adaptive entropy encoding skip processing on the cube. Refer to the following descriptions of S505 and S506.

S505: Determine a reconstructed feature value of a feature point in the to-be-encoded region after adaptive entropy encoding skip processing is performed on the to-be-encoded region.

In a possible manner, for one feature point *ŷ*[*w*][*h*][*c*] in the cube, it is determined whether a probability P that a value of the feature point *ŷ*[*w*][*h*][*c*] is an original feature value (which may be represented by k1) is greater than or equal to T0; and when the probability P that the value of the feature point *ŷ*[*w*][*h*][*c*] is k1 is greater than or equal to T0, a specific value (which may be represented by k2) is used as a reconstructed feature value of the feature point *ŷ*[*w*][*h*][*c*]; or when the probability P that the value of the feature point *ŷ*[*w*][*h*][*c*] is k1 is less than T0, the original feature value of the feature point *ŷ*[*w*][*h*][*c*] may be used as a reconstructed feature value of the feature point *ŷ*[*w*][*h*][*c*].

In a possible manner, when probability estimation is Gaussian distribution estimation, and the probability estimation result is a Gaussian distribution parameter: a mean *µ* and a variance σ, for one feature point *ŷ*[*w*][*h*][*c*] in the cube, it may be determined whether a Gaussian distribution parameter of the feature point *ŷ*[*w*][*h*][*c*] satisfies the following condition: *abs*(*µ-k*1) *+* σ *< T*1; and when the Gaussian distribution parameter of the feature point *ŷ*[*w*][*h*][*c*] satisfies *abs*(*µ-k*1) *+ σ < T*1*,* k2 may be used as a reconstructed feature value of the feature point *ŷ*[*w*][*h*][*c*]; or when the Gaussian distribution parameter of the feature point *ŷ*[*w*][*h*][*c*] does not satisfy *abs*(*µ-k*1) *+ σ < T*1*,* an original feature value of *ŷ*[*w*][*h*][*c*] may be used as a reconstructed feature value of the feature point *ŷ*[*w*][*h*][*c*].

For example, T0 and T1 are preset thresholds, and T0 and T1 each may be any value between 0 and 1. This is not limited in this application. For example, T0 is 0.99, 0.98, 0.97, or 0.95. For example, T1 is 0.2, 0.3, or 0.4. In addition, k2 may be any value, and is specifically set as required, for example, 0, 1, 2, or 3. This is not limited in this application.

In this way, a reconstructed feature value of each feature point in the cube may be obtained.

S506: Determine, based on a reconstructed feature value and an original feature value of the to-be-encoded region, whether to perform adaptive entropy encoding skip processing on the to-be-encoded region.

Next, an error between a reconstructed feature value and an original feature value of a cube may be calculated. Then, it is determined, based on the error, whether to perform adaptive entropy encoding skip processing on the cube. For example, a minimum mean square error (Minimum Mean Square Error, MES) between a reconstructed feature value and an original feature value of a feature point in the cube may be calculated as an error.

For example, when the error between the reconstructed feature value and the original feature value of the cube is greater than Thr (a preset error threshold), it may be determined that performing adaptive entropy encoding skip processing on the to-be-encoded region introduces an artifact. In this case, adaptive entropy encoding skip processing is not performed on the cube, and S510, S511, and S509 may be performed. When the error between the reconstructed feature value and the original feature value of the cube is less than or equal to Thr, it is determined that performing adaptive entropy encoding skip processing on the to-be-encoded region does not introduce an artifact. In this case, adaptive entropy encoding skip processing may be performed on the cube, and S508, S511, and S507 (including S507a and S507b) may be performed.

The original feature value of the cube may include an original feature value of a feature point included in the cube, and the reconstructed feature value of the cube may include a reconstructed feature value of a feature point included in the cube.

S507: Perform entropy encoding processing on at least one sub-block in the to-be-encoded region or skip entropy encoding processing on the at least one sub-block based on the probability estimation result of the to-be-encoded region.

S507 may include S507a and S507b.

For example, the to-be-encoded region may be divided into a plurality of sub-blocks; and then step S507a or S507b is performed for a first sub-block in the plurality of sub-blocks included in the to-be-encoded region (each sub-block in the to-be-encoded region may be determined as the first sub-block in sequence):
S507a: When a probability estimation result of the first sub-block satisfies a preset condition, skip entropy encoding processing on all feature points in the first sub-block.
S507b: When a probability estimation result of the first sub-block does not satisfy a preset condition, perform entropy encoding processing on all feature points in the first sub-block based on probability estimation results of all the feature points in the first sub-block.

For example, when the probability estimation result of the first sub-block satisfies the preset condition, while entropy encoding processing on all the feature points in the first sub-block is skipped, feature values of all the feature points in the first sub-block may be further set to a specific value k2, to facilitate subsequent picture reconstruction of the encoder.

In a possible manner, the preset condition may be that a probability P of a sub-block is greater than or equal to T2.

When the sub-block includes a plurality of feature points, the probability P of the sub-block may be an average of probabilities P of all the feature points in the sub-block, or may be a maximum value or a minimum value of probabilities P of all the feature points in the sub-block. This is not limited in this application. When the sub-block includes only one feature point, the probability P of the sub-block is a probability P of the one feature point included in the sub-block.

T2 may be a preset threshold. T2 may be any value between 0 and 1. For example, T2 is 0.99, 0.98, 0.97, or 0.95. This is not limited in this application. In a possible manner, T2 may be equal to T0. In a possible manner, T2 may not be equal to T0.

In a possible manner, when the probability estimation result is a Gaussian distribution parameter, the preset condition may be that a Gaussian distribution parameter of a sub-block satisfies *abs*(*µ-k*1) *+* σ *< T*3*.*

For example, when the sub-block includes a plurality of feature points, a mean *µ* of the sub-block may be an average of means *µ* of all the feature points in the sub-block, and a variance σ of the sub-block may be an average of variances σ of all the feature points in the block. In a possible manner, a mean *µ* of the sub-block may be a maximum value or a minimum value of means *µ* of all the feature points in the sub-block, and a variance σ of the sub-block may be a maximum value or a minimum value of variances σ of all the feature points in the sub-block. For example, when the sub-block includes only one feature point, a mean *µ* of the sub-block may be a mean *µ* of the one feature point included in the sub-block, and a variance σ of the sub-block may be a variance σ of the one feature point included in the sub-block.

T3 may be a preset threshold. T3 may be any value between 0 and 1. For example, T3 is 0.2, 0.3, or 0.4. This is not limited in this application. In a possible manner, T3 may be equal to T1. In a possible manner, T3 may not be equal to T1.

In a possible manner, the encoder and the decoder may pre-agree on a preset condition to be used and a threshold (T2 or T3) used in the preset condition. In this way, the encoder does not need to write T2 or T3 into a bitstream.

In a possible manner, the encoder may pre-construct a threshold candidate list (which may include T2 and T3) and synchronize the threshold candidate list to the decoder. Each threshold in the threshold candidate list corresponds to one index number, a length of the threshold candidate list may be set to N, and N is an integer greater than or equal to 1. A manner of constructing the threshold candidate list is not limited in this application. The encoder may write an index number of a threshold in the candidate list into a bitstream for transmission to the decoder. Specifically, the index number may be stored in a sequence header (sequence header), a picture header (picture header), a slice/slice (slice header), or supplemental enhancement information (supplemental enhancement information, SEI) and transmitted to the decoder. It should be understood that the encoder may alternatively write an index number into a bitstream by using another method. This is not limited herein.

In a possible manner, the encoder may set a threshold (which may include T2 or T3) based on picture complexity. In this way, the encoder may write the threshold (T2 or T3) used in the preset condition into a bitstream. Specifically, the threshold is written into the bitstream, for example, the threshold may be stored in a sequence header, a picture header, a slice/slice, or SEI and transmitted to the decoder. It should be understood that the encoder may alternatively write an index number into a bitstream by using another method. This is not limited herein.

S508: Set a flag corresponding to the to-be-encoded region to a first value.

S509: Perform entropy encoding processing on the to-be-encoded region based on the probability estimation result of the to-be-encoded region.

*S510:* Set a flag corresponding to the to-be-encoded region to a second value.

S511: Encode the flag.

For example, a possible manner of encoding the flag may be: writing the flag into the bitstream after flag binarization. It should be understood that, when the first value and the second value are binary values, the flag may be directly written into the bitstream.

For example, a possible manner of encoding the flag may be: determining a value probability of the flag based on the probability estimation result of the to-be-encoded region; and then encoding the flag based on the value probability of the flag. The value probability of the flag is a probability that the flag is the first value or a probability that the flag is the second value.

For example, a possible manner of determining the value probability of the flag based on the probability estimation result of the to-be-encoded region may be: determining the value probability of the flag based on a sum of probability estimation results of a plurality of sub-blocks in the to-be-encoded region.

In a possible manner, when the probability estimation result is a Gaussian distribution parameter, Gaussian distribution parameters of all feature points in all sub-blocks in the to-be-encoded region may be accumulated, to obtain a Gaussian distribution parameter of the flag. A mean of the flag is *µ_{f} =* Σ*µ*, and a variance of the flag is *σ_{f} =* Σ*σ*. Then, a probability of a Gaussian distribution with the mean *µ_{f}* and the variance *σ_{f}* in an interval of *[-0.5, 0.5]* is used as the probability that the flag is the first value.

In a possible manner, a sum of probabilities P of all the feature points in all the sub-blocks in the to-be-encoded region is calculated; and then an average probability is calculated based on the sum, and is used as the probability that the flag is the first value.

For example, a possible manner of determining the value probability of the flag based on the probability estimation result of the to-be-encoded region may be: determining the value probability of the flag based on a number of feature points on which entropy encoding processing is skipped in the to-be-encoded region and a total number of feature points in the to-be-encoded region, where the number of feature points on which entropy encoding processing is skipped in the to-be-encoded region is determined based on probability estimation results of a plurality of feature points included in the to-be-encoded region.

In a possible manner, the number of feature points on which entropy encoding processing is skipped in the to-be-encoded region may be determined in a process of performing S505, that is, when a probability P that a value of a feature point *ŷ*[*w*][*h*][*c*] is k1 is greater than or equal to T0, the feature point *ŷ*[*w*][*h*][*c*] is determined as a feature point on which entropy encoding processing is skipped.

In a possible manner, the number of feature points on which entropy encoding processing is skipped in the to-be-encoded region may be determined in a process of performing S505, that is, when a Gaussian distribution parameter of a feature point *ŷ*[*w*][*h*][*c*] satisfies *abs*(*µ-k*1) *+* σ < *T*1, the feature point *ŷ*[*w*][*h*][*c*] is determined as a feature point on which entropy encoding processing is skipped.

In a possible manner, the number of feature points on which entropy encoding processing is skipped in the to-be-encoded region may be determined in a process of performing S507, that is, when a probability estimation result of a sub-block satisfies the preset condition, a feature point *ŷ*[*w*][*h*][*c*] in the sub-block is determined as a feature point on which entropy encoding processing is skipped.

For example, a ratio of the number of feature points on which entropy encoding processing is skipped in the to-be-encoded region to the total number of feature points in the to-be-encoded region may be calculated, and the ratio is used as the probability that the flag is the first value.

For example, after S505 to S511 are completed for each to-be-encoded region, it may be determined whether the to-be-encoded region is a last region in the feature map. If yes, the procedure ends, and a bitstream of the to-be-encoded picture is obtained. If no, S505 is returned.

For example, after S505, S506, S507a, S508, and S510 are completed for each to-be-encoded region, it may be determined whether the to-be-encoded region is a last region in the feature map. If yes, S507b, S509, and S511 are performed on all to-be-encoded regions to obtain a bitstream of the to-be-encoded picture. If no, S505 is returned. In other words, for all the to-be-encoded regions, flag encoding and entropy encoding processing are finally performed. In this case, a flag encoding manner may be as follows:

For example, a possible implementation of performing flag encoding in S511 for all the to-be-encoded regions may be: after flag binarization, grouping and encoding flags corresponding to all the to-be-encoded regions, where flags of k to-be-encoded regions (namely, k cubes) are grouped into one group for encoding; and writing the flags into the bitstream.

An example in which k is 8 is used for description. When eight flags in a group each are the first value, a group flag is set to a third value (for example, the third value is 0), and the third value is written into the bitstream; otherwise, a group flag is set to a fourth value (the fourth value is different from the third value, for example, the fourth value is 1), the fourth value is written into the bitstream, and binary values of the eight flags in the group are written into the bitstream. A corresponding syntax table is shown in Table 1 after the flags corresponding to all the to-be-encoded regions are encoded. Table 1 is the syntax table of the flags corresponding to all the to-be-encoded regions.

As shown in Table 1, number_of_cube_flag_group represents a number of groups after all the regions are grouped; group_flag represents a group flag; cube_flag represents a flag corresponding to a to-be-encoded region (namely, the flags in S206, S208, and S209, in S303, S304, and S305, and in S508, S510, and S511); number_of_elements_in_group represents a number of flags in a last group; and uf(1) represents that a corresponding symbol is written into a bitstream.

**Table 1**

| | |
|---|---|
| Syntax | Description |
| for( i = 0; i < number_of_cube_flag_group-1; i++ ) { | |
| **group_flag**[ i ] | uf(1) |
| Syntax | Description |
| if(group_flag[ i ] ) | |
| for( j = 0; j < 8; j++ ) | |
| **cube_flag[** i ][ j ] | uf(1) |
| } | |
| **group_flag** [number_of_cube_flag_group-1 ] | uf(1) |
| if(group_flag[numbe-r_of_cube_flag_group-1 ] ) | |
| for( j = 0; j < number_of_elements_in_group; j++ ) | |
| **cube_flag**[ i ][ j ] | uf(1) |
| } | |

For example, a possible implementation of performing flag encoding in S511 for all the to-be-encoded regions may be: writing flags into the bitstream after flag binarization. It should be understood that, when the first value and the second value are binary values, the flag may be directly written into the bitstream.

For example, a possible implementation of performing flag encoding in S511 for all the to-be-encoded regions may be: determining value probabilities of flags based on probability estimation results of the to-be-encoded regions; and then encoding the flags based on the value probabilities of the flags. The value probability of the flag is a probability that the flag is the first value or a probability that the flag is the second value.

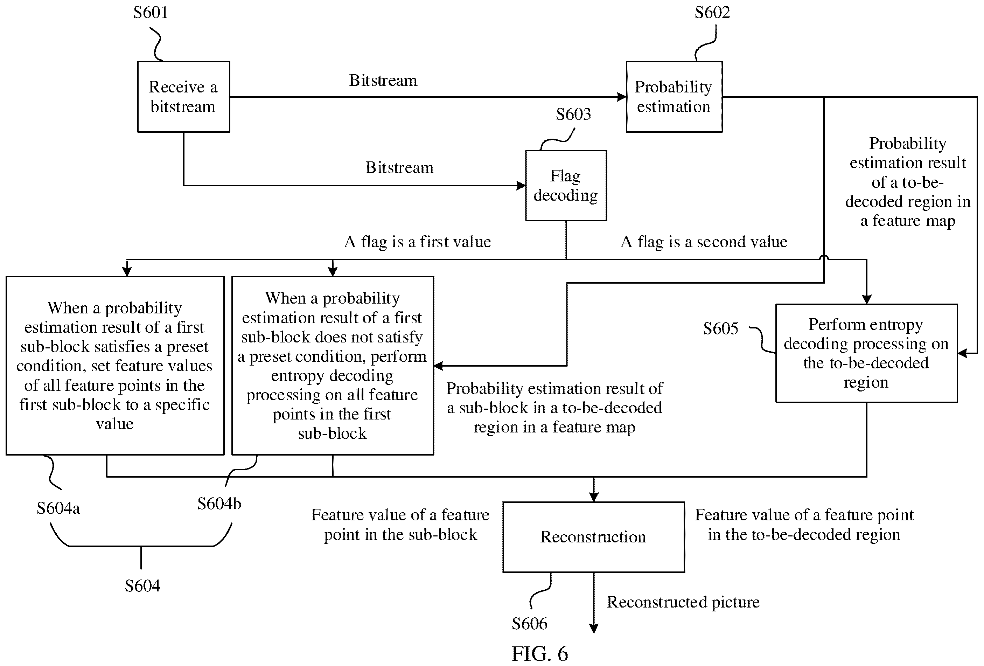

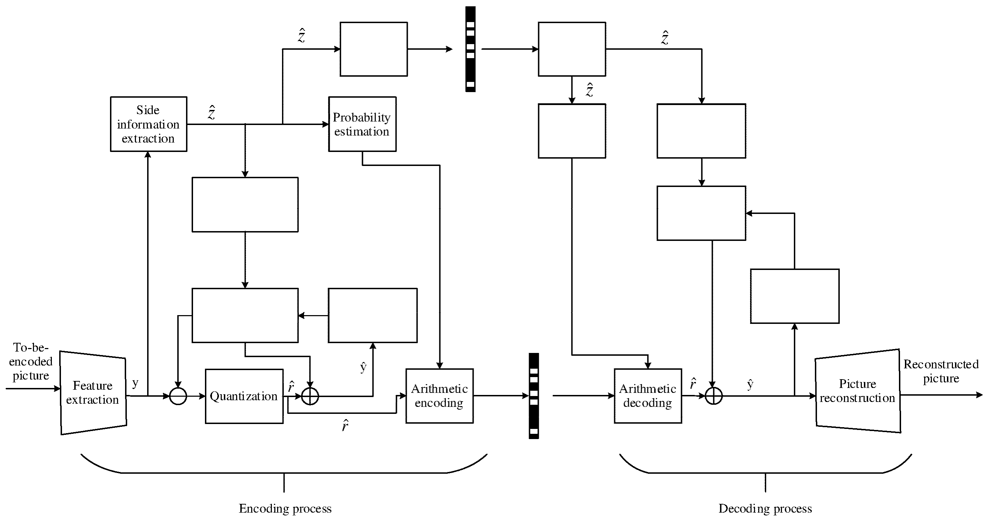

FIG. 6 is a diagram of an example decoding process. FIG. 6 shows the decoding process on the basis of FIG. 4. The decoding process in FIG. 6 corresponds to the encoding process in FIG. 5a.
S601: Receive a bitstream.
S602: Decode the bitstream to obtain side information of a feature map, and determine a probability estimation result of a to-be-decoded region in the feature map based on the side information of the feature map.
   For example, the encoder writes side information *ẑ* of a feature map *ŷ* into a bitstream, so that the decoder can perform entropy decoding processing on the bitstream and decode the bitstream to obtain the side information *ẑ* of the feature map *ŷ*, and then perform probability estimation based on the side information *ẑ* of the feature map *ŷ*, to determine a probability estimation result of the feature map, and further obtain the probability estimation result of a to-be-decoded region in the feature map. This process is similar to that of the encoder in S504, and details are not described herein again.
S603: Decode the bitstream to obtain a flag corresponding to the to-be-decoded region.

For example, if the encoder writes the flag into the bitstream after flag binarization, the decoder may directly read the flag corresponding to the to-be-decoded region from the bitstream.

For example, if the encoder groups and encodes flags corresponding to all to-be-encoded regions and writes the flags into the bitstream after flag binarization, the decoder may perform decoding based on the syntax table of the flags corresponding to all the to-be-encoded regions shown in Table 1, to read the flag corresponding to the to-be-decoded region. First, a group flag value is read; and when the group flag value is a third value, it may be determined that all k flags in a group are a first value, that is, flags of k to-be-decoded regions (namely, k cubes) are the first value; or when the group flag value is a fourth value, k flags in a group are read from the bitstream through decoding. Herein, k is the same as that on an encoder side. For example, k on the encoder is 8, and k on the decoder is also 8.

For example, if the encoder encodes the flag based on a value probability of the flag, the decoder may first determine the value probability of the flag based on the probability estimation result of the to-be-decoded region that is determined in S602, and then decode the bitstream to obtain the flag corresponding to the to-be-decoded region based on the value probability of the flag.

For example, the encoder and the decoder may pre-agree on a manner of determining the value probability of the flag.

If the encoder determines the value probability of the flag based on a sum of probability estimation results of a plurality of feature points in the to-be-encoded region, the decoder may determine the value probability of the flag based on a sum of probability estimation results of a plurality of feature points in the to-be-decoded region. For details, refer to the descriptions of S511 above. Details are not described herein again.

If the encoder determines the value probability of the flag based on a number of feature points on which entropy encoding processing is skipped in the to-be-encoded region and a total number of feature points in the to-be-encoded region, the decoder may determine, based on the probability estimation result of the to-be-decoded region, a number of feature points on which entropy decoding processing is skipped in the to-be-decoded region; and determine the value probability of the flag based on the number of feature points on which entropy decoding processing is skipped in the to-be-decoded region and a total number of feature points in the to-be-decoded region.

For example, the encoder and the decoder may pre-agree on a manner of determining a feature point on which entropy decoding processing is skipped (or entropy encoding processing is skipped) in the to-be-decoded region (or the to-be-encoded region). When the encoder determines a feature point *ŷ*[*w*][*h*][*c*] whose probability P that a value is k1 is greater than or equal to T0 as a feature point on which entropy encoding processing is skipped, the decoder may determine the feature point *ŷ*[*w*][*h*][*c*] whose probability P that the value is k1 is greater than or equal to T0 as a feature point on which entropy decoding processing is skipped. When the encoder determines a feature point *ŷ*[*w*][*h*][*c*] whose Gaussian distribution parameter satisfies *abs*(*µ-k*1) *+* σ *< T*1 as a feature point on which entropy encoding processing is skipped, the decoder may determine the feature point *ŷ*[*w*][*h*][*c*] whose Gaussian distribution parameter satisfies *abs*(*µ-k*1) *+ σ < T*1 as a feature point on which entropy decoding processing is skipped. When the encoder determines a feature point *ŷ*[*w*][*h*][*c*] included in a sub-block whose probability estimation result satisfies a preset condition as a feature point on which entropy encoding processing is skipped, the decoder may determine the feature point *ŷ*[*w*][*h*][*c*] included in the sub-block whose probability estimation result satisfies the preset condition as a feature point on which entropy decoding processing is skipped.

S604: When the flag is the first value, perform entropy decoding processing on at least one sub-block in the to-be-decoded region or set a feature value of a feature point in the at least one sub-block to a specific value based on the probability estimation result of the to-be-decoded region, to obtain a feature value of a feature point in the to-be-decoded region.

S604 may include S604a and S604b.

For example, if the flag is the first value, the decoder may perform step S604a or S604b for a first sub-block in a plurality of sub-blocks included in the to-be-decoded region:
S604a: When a probability estimation result of the first sub-block satisfies the preset condition, skip entropy decoding processing on all feature points in the first sub-block, and set feature values of all the feature points in the first sub-block to a specific value k2.
S604b: When a probability estimation result of the first sub-block does not satisfy the preset condition, perform entropy decoding processing on all feature points in the first sub-block based on probability estimation results of all the feature points in the first sub-block.

The decoder may determine, based on T2 or T3 that is read from the bitstream, whether the probability estimation result of the first sub-block satisfies the preset condition. Alternatively, the decoder may search a threshold candidate list for T2 or T3 based on an index number that is read from the bitstream, and then determine whether the probability estimation result of the first sub-block satisfies the preset condition. Certainly, the decoder may alternatively determine, based on T2 or T3 that is agreed on in advance, whether the probability estimation result of the first sub-block satisfies the preset condition.

S605: When the flag is a second value, perform entropy decoding processing on the to-be-decoded region based on the probability estimation result of the to-be-decoded region, to obtain a feature value of a feature point in the to-be-decoded region.

S606: Perform reconstruction based on a feature value of a feature point in the feature map, to obtain a reconstructed picture.

For example, for S605 and S606, refer to the foregoing descriptions of S305 and S306. Details are not described herein again.

For example, the feature decoding module may be implemented based on a neural network of any structure, for example, a fully connected network, a convolutional neural network, or a cyclic neural network. Optionally, the neural network may use a multi-layer deep neural network structure to achieve better estimation effect.

In this way, a transmission flag is encoded at a cube level, indicating whether to perform entropy encoding and decoding skip processing based on a probability estimation result for a current cube, thereby avoiding a case in which an artifact is generated by executing a skip algorithm based on a probability estimation result.

In a possible manner, in an encoding process, if a probability estimation result is a Gaussian distribution parameter, after a feature map y and a probability estimation result of the feature map y are obtained, a predictor of each feature point *y*[*w*][*h*][*c*] in the feature map y is set to a corresponding mean *µ*. In this way, a feature map v may be obtained. Next, a residual between feature values of corresponding feature points in the feature map y and the feature map v may be calculated, to obtain a feature map *r.* Then, the feature map *r* is quantized to obtain a feature map *r̂*. Subsequently, entropy encoding processing may be performed on the feature map *r̂* with reference to S505 to S511. Correspondingly, in a decoding process, after S604 and S605 are performed, a feature value of a feature point in the feature map *r̂* is obtained. Next, a predictor of each feature point *r̂*[*w*][*h*][*c*] in the feature map *r̂* is set to a corresponding mean *µ*. In this way, the feature map v may be obtained. Then, feature values of corresponding feature points in the feature map *r̂* and the feature map v may be added to obtain a feature map *ŷ*, and then S606 is performed.

It should be noted that whether a feature map used for entropy encoding processing is the feature map *ŷ* or the feature map *r̂* is not limited in this application.

FIG. 7 is a diagram of an example end-to-end picture compression process. FIG. 7 shows the end-to-end picture compression process on the basis of FIG. 4. Probability estimation in FIG. 7 is Gaussian distribution estimation. In FIG. 7, context information may be used to optimize a Gaussian distribution parameter µ.

As shown in FIG. 7, for example, an encoding process may include feature extraction, quantization, side information extraction, probability estimation, first predictor estimation, second predictor estimation, context information extraction, and arithmetic encoding.

For example, the encoder may further include a context module (configured to perform context information extraction in the encoding process in FIG. 7), a predictor estimation module (configured to perform first predictor estimation in the encoding process in FIG. 7), and a prediction module (configured to perform second predictor estimation in the encoding process in FIG. 7). The probability estimation module and the predictor estimation module may be combined into a whole. This is not limited in this application.

As shown in FIG. 7, for example, a feature map y is obtained after the feature extraction module performs feature extraction on a to-be-encoded picture. Then, after the side information extraction module performs side information extraction on the feature map y, side information *ẑ* is obtained (side information z may be obtained by performing side information extraction on the feature map y by the side information extraction module, and then the side information z may be quantized to obtain the side information *ẑ*), and is output to the probability estimation module. The probability estimation module performs Gaussian distribution estimation based on the side information *ẑ*, to obtain a Gaussian distribution parameter *σ*[*w*][*h*][*c*] of each feature point *y*[*w*][*h*][*c*] in the feature map y. In addition, the predictor estimation module may perform first predictor estimation on the side information *ẑ*, and output a feature map F to the prediction module. Then, the prediction module may perform second predictor estimation on a feature G obtained by performing context information extraction based on the feature map F and the context module, and output a Gaussian distribution parameter *µ*[*w*][*h*][*c*] of each feature point *y*[*w*][*h*][*c*]*.* For one feature point, the context module performs context information extraction based on a reconstructed feature value of an encoded feature point spatially adjacent to the feature point.

For example, a predictor of each feature point *y*[*w*][*h*][*c*] in the feature map y may be set to a corresponding mean *µ*[*w*][*h*][*c*]. In this way, a feature map v may be obtained. Next, a residual between feature values of corresponding feature points in the feature map y and the feature map v may be calculated, to obtain a feature map *r.* Then, the feature map *r* is quantized to obtain a feature map *r̂*. In addition, in a reconstruction process, feature values of corresponding feature points in the feature map *r̂* and the feature map v may be added to obtain a feature map *ŷ*. A feature value of an encoded feature point *ŷ*[*w*][*h*][*c*] in the feature map *ŷ* is a reconstructed feature value of the encoded feature point. Apparently, a Gaussian distribution parameter of the feature map y is (µ, σ). The feature map *r* satisfies a Gaussian distribution with a mean 0 and a variance σ, that is, the Gaussian distribution parameter of the feature map r is (0, σ).

Then, the entropy encoding module may perform arithmetic encoding on the feature map *r̂* based on a probability estimation result of the feature map *r̂* (for details, refer to the descriptions in FIG. 5), to obtain a bitstream 1; and perform arithmetic encoding on the side information *ẑ*, to obtain a bitstream 2. Both the bitstream 1 and the bitstream 2 are a part of a bitstream of the to-be-encoded picture.

As shown in FIG. 7, for example, a decoding process may include arithmetic decoding, probability estimation, first predictor estimation, second predictor estimation, context information extraction, and picture reconstruction.

For example, the decoder may further include a context module (configured to perform context information extraction in the decoding process in FIG. 7), a predictor estimation module (configured to perform first predictor estimation in the decoding process in FIG. 7), and a prediction module (configured to perform second predictor estimation in the decoding process in FIG. 7). The probability estimation module and the predictor estimation module may be combined into a whole. This is not limited in this application.

As shown in FIG. 7, for example, the decoder may perform arithmetic decoding on the bitstream 2, parse the bitstream 2 to obtain the side information *ẑ*, and perform Gaussian distribution estimation based on the side information *ẑ*, to obtain a Gaussian distribution parameter *σ*[*w*][*h*][*c*] of each feature point *r̂*[*w*][*h*][*c*] in the feature map *r̂*. In addition, the predictor estimation module may perform first predictor estimation on the side information *ẑ*, and output the feature map F to the prediction module. Then, the prediction module may perform second predictor estimation on the feature G obtained by performing context information extraction based on the feature map F and the context module, and output a Gaussian distribution parameter *µ*[*w*][*h*][*c*] of each feature point *ŷ*[*w*][*h*][*c*]. For one feature point, the context module performs context information extraction based on a reconstructed feature value of a decoded feature point spatially adjacent to the feature point.

For example, arithmetic decoding may be performed on the bitstream 1 based on the Gaussian distribution parameter *σ*[*w*][*h*][*c*] of each feature point *r̂*[*w*][*h*][*c*] in the feature map *r̂*, to parse the bitstream 1 to obtain the feature map *r̂.* Then, a predictor of each feature point *r̂*[*w*][*h*][*c*] in the feature map *r̂* may be set to a corresponding mean *µ*[*w*][*h*][*c*]. In this way, the feature map v may be obtained. Next, feature values of corresponding feature points in the feature map *r̂* and the feature map v may be added to obtain the feature map *ŷ*. A feature value of a decoded feature point *ŷ*[*w*][*h*][*c*] in the feature map *ŷ* is a reconstructed feature value of the decoded feature point.

For an entropy encoding process and an entropy decoding process for the feature map *r̂*, refer to the descriptions in the embodiments in FIG. 5a and FIG. 6. Details are not described herein again.

It should be understood that the context module is an optional module. When the encoder (decoder) does not include the context module, the encoder (decoder) performs first predictor estimation on the side information *ẑ* by using the predictor estimation module, and outputs the Gaussian distribution parameter *µ*[*w*][*h*][*c*] of each feature point *ŷ*[*w*][*h*][*c*].

It should be understood that the side information extraction module is an optional module. When the encoder (decoder) does not include the side information extraction module, the encoder (decoder) may invoke the context module to perform context information extraction, and then the probability estimation module performs probability estimation based on the context information, to determine a probability estimation result.

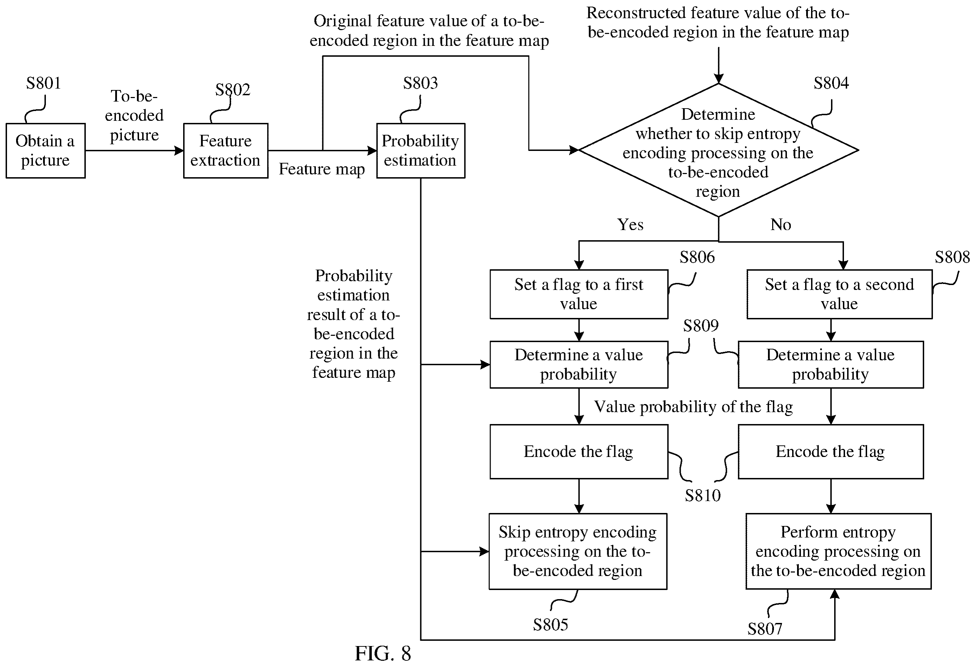

FIG. 8 is a diagram of an example encoding process. FIG. 8 shows the encoding process on the basis of FIG. 1a and FIG. 1c. In the embodiment in FIG. 2, an example of encoding one picture is used for description. The picture may be an independent picture, or may be one frame in a video. This is not limited in this application.

S801: Obtain a to-be-encoded picture.

S802: Extract a feature map of the to-be-encoded picture.

SS03: Determine a probability estimation result of a to-be-encoded region in the feature map.

For example, for S801 to S803, refer to the foregoing descriptions of S201 to S203.

For example, the probability estimation result of the to-be-encoded region in the feature map may be determined based on context information and/or side information.

For example, a feature map *ŷ* or a feature map *r̂* may be divided into a plurality of cubes (cube) by using w1×h1×c1 as a basic unit (w1 is an integer between 1 and W, h1 is an integer between 1 and H, and c1 is an integer between 1 and C). When c1=1, one cube means one block.

The following uses an example in which one to-be-encoded region is one cube for description.

S804: Determine, based on an original feature value of the to-be-encoded region and a reconstructed feature value of the to-be-encoded region that is determined after entropy encoding processing on the to-be-encoded region is skipped, whether to skip entropy encoding processing on the to-be-encoded region.

For example, the reconstructed feature value of the to-be-encoded region may be first determined if entropy encoding processing on the to-be-encoded region is skipped; and then the reconstructed feature value of the to-be-encoded region is compared with the original feature value to determine whether to skip entropy encoding processing on the to-be-encoded region.

For example, through comparison between the reconstructed feature value and the original feature value of the to-be-encoded region, it may be determined whether an artifact is introduced after entropy encoding processing on the to-be-encoded region is skipped. When it is determined, based on a result of comparison between the reconstructed feature value and the original feature value of the to-be-encoded region, that an artifact is introduced after entropy encoding processing on the to-be-encoded region is skipped, entropy encoding processing on the to-be-encoded region may not be skipped. In this case, S808, S809, S810, and S807 may be performed. When it is determined, based on a result of comparison between the reconstructed feature value and the original feature value of the to-be-encoded region, that no artifact is introduced after entropy encoding processing on the to-be-encoded region is skipped, entropy encoding processing on the to-be-encoded region may be skipped. In this case, S806, S809, S810, and S805 may be performed. This can avoid introducing an artifact when a codec adaptively determines entropy decoding skip (skip) processing.

The original feature value of the to-be-encoded region may include original feature values of a plurality of feature points included in the to-be-encoded region, and the reconstructed feature value of the to-be-encoded region may include reconstructed feature values of the plurality of feature points included in the to-be-encoded region.

Specifically, reconstructed feature values of all feature points *ŷ*[*w*][*h*][*c*] in a cube may be set to a specific value k2. Next, an error between a reconstructed feature value and an original feature value of the cube may be calculated. Then, it is determined, based on the error, whether to skip entropy encoding processing on the cube. For example, a minimum mean square error (Minimum Mean Square Error, MES) between a reconstructed feature value and an original feature value of a feature point in the cube may be calculated as an error.

For example, when the error between the reconstructed feature value and the original feature value of the cube is greater than Thr (a preset error threshold), it may be determined that entropy encoding processing on the cube does not need to be skipped, and S807 may be performed; or when the error between the reconstructed feature value and the original feature value of the cube is less than or equal to Thr, it is determined that entropy encoding processing on the cube may be skipped, and S805 may be performed.

S805: Skip entropy encoding processing on the to-be-encoded region.

For example, when entropy encoding processing on all feature points in the to-be-encoded region is skipped, feature values of all the feature points in the to-be-encoded region may be set to the specific value k2, to facilitate subsequent picture reconstruction of the encoder.

S806: Set a flag corresponding to the to-be-encoded region to a first value.

It should be noted that, as shown in FIG. 8, S809 and S810 are performed after S806, and S805 is performed after S809 and S810. It should be understood that, in this application, alternatively, S805 may be performed first, then S806 is performed, and then S809 and S810 are performed. In other words, this application does not limit a sequence of encoding the flag and skipping entropy encoding processing on the to-be-encoded region.

S807: Perform entropy encoding processing on the to-be-encoded region based on the probability estimation result of the to-be-encoded region.

S808: Set a flag corresponding to the to-be-encoded region to a second value.

For example, for S805 to S808, refer to the descriptions in the foregoing embodiment. Details are not described herein again.

It should be noted that, as shown in FIG. 8, S809 and S810 are performed after S808, and S807 is performed after S809 and S810. It should be understood that, in this application, alternatively, S807 may be performed first, then S808 is performed, and then S809 and S810 are performed. In other words, this application does not limit a sequence of encoding the flag and performing entropy encoding processing on the to-be-encoded region.

S809: Determine a value probability of the flag corresponding to the to-be-encoded region based on the probability estimation result of the to-be-encoded region, where the value probability of the flag is a probability that the flag is the first value or a probability that the flag is the second value.

For example, in a possible manner of S809, the value probability of the flag may be determined based on a sum of probability estimation results of a plurality of feature points in the to-be-encoded region. For details, refer to the descriptions in the foregoing embodiment. Details are not described herein again.

For example, in a possible manner of S809, a number of feature points on which entropy encoding processing is skipped in the to-be-encoded region may be determined based on the probability estimation result of the to-be-encoded region; and the value probability of the flag is determined based on the number of feature points on which entropy encoding processing is skipped in the to-be-encoded region and a total number of feature points in the to-be-encoded region. For details, refer to the descriptions in the foregoing embodiment. Details are not described herein again.

S810: Encode the flag based on the value probability of the flag.

For example, for S810, refer to the foregoing descriptions. Details are not described herein again.

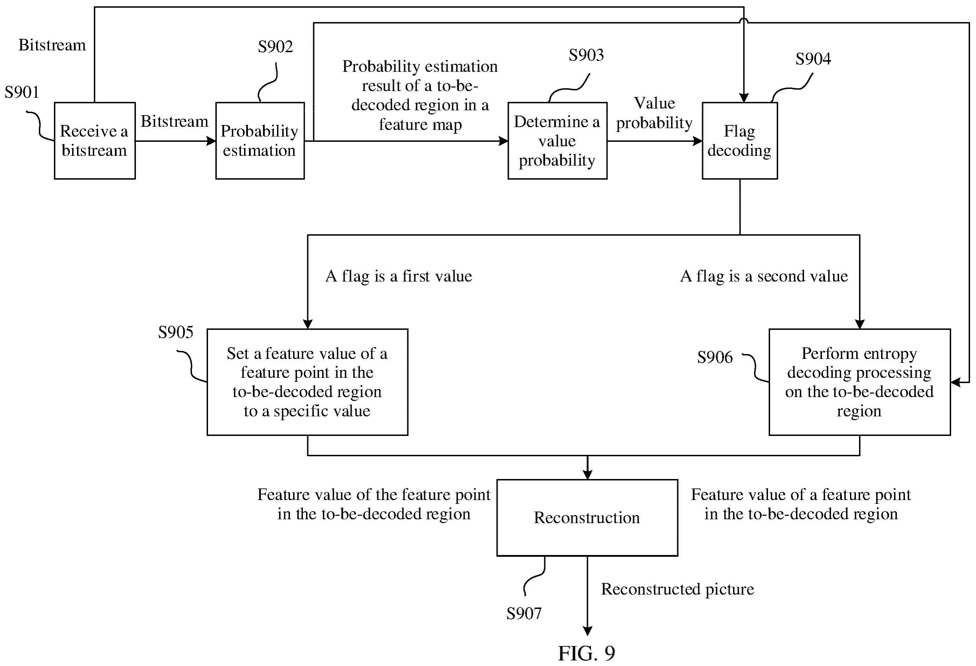

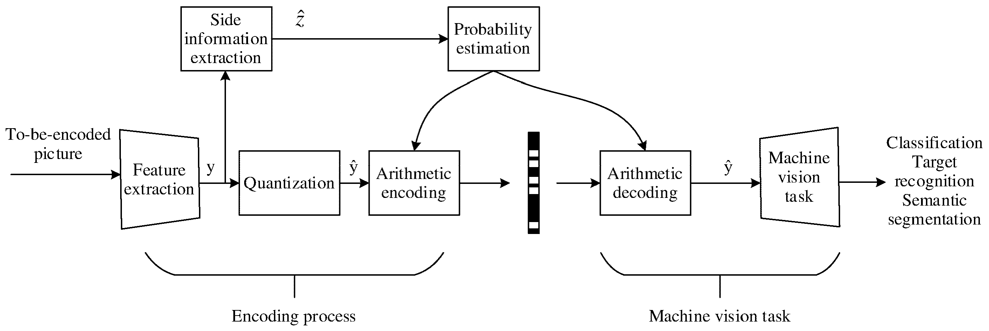

FIG. 9 is a diagram of an example decoding process. FIG. 9 shows the decoding process on the basis of FIG. 1a and FIG. 1c. The decoding process in FIG. 9 corresponds to the encoding process in FIG. 8.

S901: Obtain a bitstream.

S902: Determine a probability estimation result of a to-be-decoded region in a feature map corresponding to the bitstream.

S903: Determine a value probability of a flag corresponding to the to-be-decoded region based on the probability estimation result of the to-be-decoded region, where the value probability of the flag is a probability that the flag is a first value or a probability that the flag is a second value.

For example, in an implementation of S903, a number of feature points on which entropy decoding processing is skipped in the to-be-decoded region may be determined based on the probability estimation result of the to-be-decoded region; and the value probability of the flag is determined based on the number of feature points on which entropy decoding processing is skipped in the to-be-decoded region and a total number of feature points in the to-be-decoded region. For details, refer to the foregoing descriptions. Details are not described herein again.

For example, in an implementation of S903, the value probability of the flag may be determined based on a sum of probability estimation results of a plurality of feature points in the to-be-decoded region. For details, refer to the foregoing descriptions. Details are not described herein again.

S904: Decode the bitstream to obtain the flag corresponding to the to-be-decoded region based on the value probability of the flag.

S905: When the flag is the first value, set a feature value of a feature point in the to-be-decoded region to a specific value.

S906: When the flag is the second value, perform entropy decoding processing on the to-be-decoded region based on the probability estimation result of the to-be-decoded region, to obtain a feature value of a feature point in the to-be-decoded region.

After S905 and S906 are performed for all to-be-decoded regions in the feature map, if feature values of all feature points in a feature map *ŷ* are obtained, S907 may be directly performed; if feature values of all feature points in a feature map *r̂* are obtained, predictors of all the feature points in the feature map *r̂* may be set to a mean *µ*, to obtain a feature map v; and then the feature values of all the feature points in the feature map *r̂* and feature values of all feature points in the feature map v are added, to obtain a feature map *ŷ*, and then S907 is performed.

S907: Perform reconstruction based on a feature value of a feature point in the feature map, to obtain a reconstructed picture.

FIG. 10 is a diagram of an example machine vision task based on encoding and decoding. FIG. 10 is shown on the basis of FIG. 1b.

For an encoding process and an entropy decoding process in FIG. 10, refer to the descriptions in the foregoing embodiment. After a feature map *ŷ* is obtained through entropy decoding, the machine vision task is executed based on the feature map *ŷ*, to implement classification, target recognition, semantic segmentation, and the like.

For example, this application provides an encoder. The encoder may include:
an obtaining module, configured to obtain a to-be-encoded picture;
a feature extraction module, configured to extract a feature map of the to-be-encoded picture;
a probability estimation module, configured to determine a probability estimation result of a to-be-encoded region in the feature map; and
an entropy encoding module, configured to: determine, based on an original feature value of the to-be-encoded region and a reconstructed feature value that is determined after adaptive entropy encoding skip processing is performed on the to-be-encoded region, whether to perform adaptive entropy encoding skip processing on the to-be-encoded region; if yes, perform entropy encoding processing on at least one sub-block in the to-be-encoded region or skip entropy encoding processing on the at least one sub-block based on the probability estimation result of the to-be-encoded region, and set a flag corresponding to the to-be-encoded region to a first value; or if no, perform entropy encoding processing on the to-be-encoded region based on the probability estimation result of the to-be-encoded region, and set a flag corresponding to the to-be-encoded region to a second value; and encode the flag.

It should be understood that the encoder in this application may further perform the steps in the encoding processes in FIG. 2 and FIG. 5a.

For example, this application provides a decoder. The decoder may include: a receiving module, configured to receive a bitstream;
an entropy decoding module, configured to: determine a probability estimation result of a to-be-decoded region in a feature map corresponding to the bitstream, and decode the bitstream to obtain a flag corresponding to the to-be-decoded region; and when the flag is a first value, perform entropy decoding processing on at least one sub-block in the to-be-decoded region or set a feature value of a feature point in the at least one sub-block to a specific value based on the probability estimation result of the to-be-decoded region, to obtain a feature value of a feature point in the to-be-decoded region; or when the flag is a second value, perform entropy decoding processing on the to-be-decoded region based on the probability estimation result of the to-be-decoded region, to obtain a feature value of a feature point in the to-be-decoded region; and
a feature decoding module, configured to perform reconstruction based on a feature value of a feature point in the feature map, to obtain a reconstructed picture.

It should be understood that the decoder in this application may further perform the steps in the decoding processes in FIG. 3 and FIG. 6.

For example, this application provides an encoder. The encoder may include:
an obtaining module, configured to obtain a to-be-encoded picture;
a feature extraction module, configured to extract a feature map of the to-be-encoded picture;
a probability estimation module, configured to determine a probability estimation result of a to-be-encoded region in the feature map; and
an entropy encoding module, configured to: determine, based on an original feature value of the to-be-encoded region and a reconstructed feature value that is determined after entropy encoding processing on the to-be-encoded region is skipped, whether to skip entropy encoding processing on the to-be-encoded region; if yes, skip entropy encoding processing on the to-be-encoded region, and set a flag corresponding to the to-be-encoded region to a first value; or if no, perform entropy encoding processing on the to-be-encoded region based on the probability estimation result of the to-be-encoded region, and set a flag corresponding to the to-be-encoded region to a second value; determine a value probability of the flag based on the probability estimation result of the to-be-encoded region, where the value probability of the flag is a probability that the flag is the first value or a probability that the flag is the second value; and encode the flag based on the value probability of the flag.

It should be understood that the encoder in this application may further perform the steps in the encoding process in FIG. 8.

For example, this application provides a decoder. The decoder may include:
a receiving module, configured to receive a bitstream;
an entropy decoding module, configured to: determine a probability estimation result of a to-be-decoded region in a feature map corresponding to the bitstream; determine a value probability of a flag corresponding to the to-be-decoded region based on the probability estimation result of the to-be-decoded region, where the value probability of the flag is a probability that the flag is a first value or a probability that the flag is a second value; decode the bitstream to obtain the flag based on the value probability of the flag; and when the flag is the first value, set a feature value of a feature point in the to-be-decoded region to a specific value; or when the flag is the second value, perform entropy decoding processing on the to-be-decoded region based on the probability estimation result of the to-be-decoded region, to obtain a feature value of a feature point in the to-be-decoded region; and
a feature decoding module, configured to perform reconstruction based on a feature value of a feature point in the feature map, to obtain a reconstructed picture.

It should be understood that the decoder in this application may further perform the steps in the decoding process in FIG. 9.

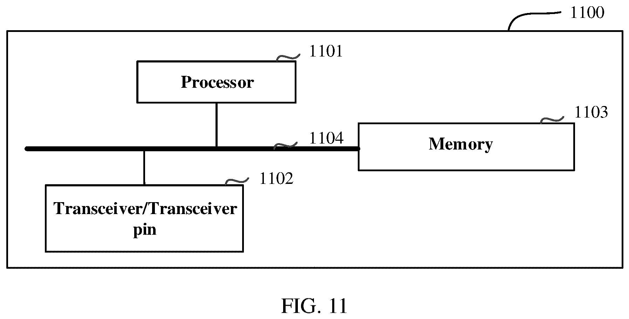

In an example, FIG. 11 is a block diagram of an apparatus 1100 according to an embodiment of this application. The apparatus 1100 may include a processor 1101 and a transceiver/transceiver pin 1102. Optionally, the apparatus 1100 further includes a memory 1103.

Components of the apparatus 1100 are coupled together through a bus 1104. In addition to a data bus, the bus 1104 further includes a power bus, a control bus, and a status signal bus. However, for clear description, various buses are referred to as the bus 1104 in the figure.

Optionally, the memory 1103 may be configured to store instructions in the foregoing method embodiments. The processor 1101 may be configured to: execute the instructions in the memory 1103, control a receive pin to receive a signal, and control a transmit pin to send a signal.

The apparatus 1100 may be the electronic device or a chip of the electronic device in the foregoing method embodiments.

For example, the electronic device may be a terminal device, or may be a server.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data through the one or more interface circuits. When the one or more processors execute computer instructions, an electronic device is enabled to perform the foregoing related method steps to implement the encoding and decoding methods in the foregoing embodiments. The interface circuit is a transceiver/transceiver pin 1102.

An embodiment further provides a computer-readable storage medium. The computer-readable storage medium stores computer instructions. When the computer instructions are run on an electronic device, the electronic device is enabled to perform the foregoing related method steps to implement the encoding and decoding methods in the foregoing embodiments.

An embodiment further provides a computer program product. The computer program product includes computer instructions. When the computer instructions are executed by a computer or a processor, the computer is enabled to perform the foregoing related steps to implement the encoding and decoding methods in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the encoding and decoding methods in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effect in the corresponding method provided above. Details are not described herein.

Based on the descriptions of the foregoing implementations, a person skilled in the art may understand that, for a purpose of convenient and brief description, division into the foregoing functional modules is used as an example for illustration. During actual application, the foregoing functions may be allocated to different functional modules and implemented as required, that is, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be or may not be physically separate, and parts displayed as units may be one or more physical units, that is, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read only memory (read only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in embodiments of this application may be implemented by hardware, or may be implemented by a processor by executing software instructions. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that, in the foregoing one or more examples, functions described in embodiments of this application may be implemented by hardware, software, firmware, or any combination thereof. When the functions are implemented by software, the functions may be stored in a computer-readable medium or transmitted as one or more instructions or code in a computer-readable medium. The computer-readable medium includes a computer-readable storage medium and a communication medium. The communication medium includes any medium that enables a computer program to be transmitted from one place to another. The storage medium may be any available medium accessible to a general-purpose or a special-purpose computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

## Claims

1. An encoding method, wherein the method comprises:
obtaining a to-be-encoded picture;
extracting a feature map of the to-be-encoded picture, and determining a probability estimation result of a to-be-encoded region in the feature map;
determining, based on an original feature value of the to-be-encoded region and a reconstructed feature value of the to-be-encoded region that is determined after adaptive entropy encoding skip processing is performed on the to-be-encoded region, whether to perform adaptive entropy encoding skip processing on the to-be-encoded region;
if yes, performing entropy encoding processing on at least one sub-block in the to-be-encoded region or skipping entropy encoding processing on the at least one sub-block based on the probability estimation result of the to-be-encoded region, and setting a flag corresponding to the to-be-encoded region to a first value; or
if no, performing entropy encoding processing on the to-be-encoded region based on the probability estimation result of the to-be-encoded region, and setting a flag corresponding to the to-be-encoded region to a second value; and
encoding the flag.

2. The method according to claim 1, wherein encoding the flag comprises:
determining a value probability of the flag based on the probability estimation result of the to-be-encoded region, wherein the value probability of the flag is a probability that the flag is the first value or a probability that the flag is the second value; and
encoding the flag based on the value probability of the flag.

3. The method according to claim 1 or 2, wherein determining, based on the original feature value of the to-be-encoded region and the reconstructed feature value of the to-be-encoded region that is determined after adaptive entropy encoding skip processing is performed on the to-be-encoded region, whether to perform adaptive entropy encoding skip processing on the to-be-encoded region comprises:
determining an error between the reconstructed feature value and the original feature value; and
when the error is greater than an error threshold, determining to perform adaptive entropy encoding skip processing on the to-be-encoded region; or
when the error is less than or equal to an error threshold, determining not to perform adaptive entropy encoding skip processing on the to-be-encoded region.

4. The method according to claim 2, wherein the to-be-encoded region comprises a plurality of sub-blocks, and the probability estimation result of the to-be-encoded region comprises probability estimation results of the plurality of sub-blocks; and determining the value probability of the flag based on the probability estimation result of the to-be-encoded region comprises:
determining the value probability of the flag based on a sum of the probability estimation results of the plurality of sub-blocks in the to-be-encoded region.

5. The method according to claim 2, wherein the to-be-encoded region comprises a plurality of sub-blocks, the sub-block comprises at least one feature point, and the probability estimation result of the to-be-encoded region comprises probability estimation results of a plurality of feature points; and determining the value probability of the flag based on the probability estimation result of the to-be-encoded region comprises:
determining the value probability of the flag based on a number of feature points on which entropy encoding processing is skipped in the to-be-encoded region and a total number of feature points in the to-be-encoded region, wherein
the number of feature points on which entropy encoding processing is skipped in the to-be-encoded region is determined based on the probability estimation results of the plurality of feature points comprised in the to-be-encoded region.

6. The method according to any one of claims 1 to 5, wherein the to-be-encoded region comprises a plurality of sub-blocks, the probability estimation result of the to-be-encoded region comprises probability estimation results of the plurality of sub-blocks, the sub-block comprises at least one feature point, and the probability estimation result of the sub-block comprises a probability estimation result of a feature point comprised in the sub-block; and
performing entropy encoding processing on the at least one sub-block in the to-be-encoded region or skipping entropy encoding processing on the at least one sub-block based on the probability estimation result of the to-be-encoded region comprises:
for a first sub-block in the plurality of sub-blocks:
when a probability estimation result of the first sub-block satisfies a preset condition, skipping entropy encoding processing on all feature points in the first sub-block; or
when a probability estimation result of the first sub-block does not satisfy a preset condition, performing entropy encoding processing on all feature points in the first sub-block based on probability estimation results of all the feature points in the first sub-block.

7. A decoding method, wherein the method comprises:
receiving a bitstream;
determining a probability estimation result of a to-be-decoded region in a feature map corresponding to the bitstream, and decoding the bitstream to obtain a flag corresponding to the to-be-decoded region;
when the flag is a first value, performing entropy decoding processing on at least one sub-block in the to-be-decoded region or setting a feature value of a feature point in the at least one sub-block to a specific value based on the probability estimation result of the to-be-decoded region, to obtain a feature value of a feature point in the to-be-decoded region; or
when the flag is a second value, performing entropy decoding processing on the to-be-decoded region based on the probability estimation result of the to-be-decoded region, to obtain a feature value of a feature point in the to-be-decoded region; and
performing reconstruction based on a feature value of a feature point in the feature map, to obtain a reconstructed picture.

8. The method according to claim 7, wherein decoding the bitstream to obtain the flag corresponding to the to-be-decoded region comprises:
determining a value probability of the flag based on the probability estimation result of the to-be-decoded region, wherein the value probability of the flag is a probability that the flag is the first value or a probability that the flag is the second value; and
decoding the bitstream to obtain the flag corresponding to the to-be-decoded region based on the value probability of the flag.

9. The method according to claim 7, wherein the to-be-decoded region comprises a plurality of sub-blocks, and the probability estimation result of the to-be-decoded region comprises probability estimation results of the plurality of sub-blocks; and determining the value probability of the flag based on the probability estimation result of the to-be-decoded region comprises:
determining the value probability of the flag based on a sum of the probability estimation results of the plurality of sub-blocks in the to-be-decoded region.

10. The method according to claim 7, wherein the to-be-decoded region comprises a plurality of sub-blocks, the sub-block comprises at least one feature point, and the probability estimation result of the to-be-decoded region comprises probability estimation results of a plurality of feature points; and determining the value probability of the flag based on the probability estimation result of the to-be-decoded region comprises:
determining, based on the probability estimation results of the plurality of feature points comprised in the to-be-decoded region, a number of feature points on which entropy decoding processing is skipped in the to-be-decoded region; and
determining the value probability of the flag based on the number of feature points on which entropy decoding processing is skipped in the to-be-decoded region and a total number of feature points in the to-be-decoded region.

11. The method according to any one of claims 7 to 10, wherein the to-be-decoded region comprises a plurality of sub-blocks, the probability estimation result of the to-be-decoded region comprises probability estimation results of the plurality of sub-blocks, the sub-block comprises at least one feature point, and the probability estimation result of the sub-block comprises a probability estimation result of a feature point comprised in the sub-block; and
performing entropy decoding processing on the at least one sub-block in the to-be-decoded region or setting the feature value of the feature point in the at least one sub-block to the specific value based on the probability estimation result of the to-be-decoded region, to obtain the feature value of the feature point in the to-be-decoded region comprises:
for a first sub-block in the plurality of sub-blocks:
when a probability estimation result of the first sub-block satisfies a preset condition, setting feature values of all feature points in the first sub-block to a specific value; or
when a probability estimation result of the first sub-block does not satisfy a preset condition, performing entropy decoding processing on all feature points in the first sub-block based on probability estimation results of all the feature points in the first sub-block, to obtain feature values of all the feature points in the first sub-block.

12. An encoding method, wherein the method comprises:
obtaining a to-be-encoded picture;
extracting a feature map of the to-be-encoded picture, and determining a probability estimation result of a to-be-encoded region in the feature map;
determining, based on an original feature value of the to-be-encoded region and a reconstructed feature value of the to-be-encoded region that is determined after entropy encoding processing on the to-be-encoded region is skipped, whether to skip entropy encoding processing on the to-be-encoded region;
if yes, skipping entropy encoding processing on the to-be-encoded region, and setting a flag corresponding to the to-be-encoded region to a first value; or
if no, performing entropy encoding processing on the to-be-encoded region based on the probability estimation result of the to-be-encoded region, and setting a flag corresponding to the to-be-encoded region to a second value;
determining a value probability of the flag based on the probability estimation result of the to-be-encoded region, wherein the value probability of the flag is a probability that the flag is the first value or a probability that the flag is the second value; and
encoding the flag based on the value probability of the flag.

13. The method according to claim 12, wherein determining, based on the original feature value of the to-be-encoded region and the reconstructed feature value of the to-be-encoded region that is determined after entropy encoding processing on the to-be-encoded region is skipped, whether to skip entropy encoding processing on the to-be-encoded region comprises:
determining an error between the reconstructed feature value and the original feature value; and
when the error is greater than an error threshold, determining to skip entropy encoding processing on the to-be-encoded region; or
when the error is less than or equal to an error threshold, determining not to skip entropy encoding processing on the to-be-encoded region.

14. The method according to claim 12 or 13, wherein the to-be-encoded region comprises a plurality of feature points, and the probability estimation result of the to-be-encoded region comprises probability estimation results of the plurality of feature points in the to-be-encoded region; and determining the value probability of the flag based on the probability estimation result of the to-be-encoded region comprises:
determining the value probability of the flag based on a sum of the probability estimation results of the plurality of feature points in the to-be-encoded region.

15. The method according to claim 12 or 13, wherein the to-be-encoded region comprises a plurality of feature points, and the probability estimation result of the to-be-encoded region comprises probability estimation results of the plurality of feature points in the to-be-encoded region; and determining the value probability of the flag based on the probability estimation result of the to-be-encoded region comprises:
determining, based on the probability estimation result of the to-be-encoded region, a number of feature points on which entropy encoding processing is skipped in the to-be-encoded region; and
determining the value probability of the flag based on the number of feature points on which entropy encoding processing is skipped in the to-be-encoded region and a total number of feature points in the to-be-encoded region.

16. The method according to claim 15, wherein determining, based on the probability estimation result of the to-be-encoded region, the number of feature points on which entropy encoding processing is skipped in the to-be-encoded region comprises:
using a number of feature points whose probability estimation results satisfy a preset condition in the to-be-encoded region as the number of feature points on which entropy encoding processing is skipped in the to-be-encoded region.

17. A decoding method, wherein the method comprises:
receiving a bitstream;
determining a probability estimation result of a to-be-decoded region in a feature map corresponding to the bitstream;
determining a value probability of a flag corresponding to the to-be-decoded region based on the probability estimation result of the to-be-decoded region, wherein the value probability of the flag is a probability that the flag is a first value or a probability that the flag is a second value;
decoding the bitstream to obtain the flag based on the value probability of the flag;
when the flag is the first value, setting a feature value of a feature point in the to-be-decoded region to a specific value; or
when the flag is the second value, performing entropy decoding processing on the to-be-decoded region based on the probability estimation result of the to-be-decoded region, to obtain a feature value of a feature point in the to-be-decoded region; and
performing reconstruction based on a feature value of a feature point in the feature map, to obtain a reconstructed picture.

18. The method according to claim 17, wherein the to-be-decoded region comprises a plurality of feature points, and the probability estimation result of the to-be-decoded region comprises probability estimation results of the plurality of feature points in the to-be-decoded region; and determining the value probability of the flag corresponding to the to-be-decoded region based on the probability estimation result of the to-be-decoded region comprises:
determining the value probability of the flag based on a sum of the probability estimation results of the plurality of feature points in the to-be-decoded region.

19. The method according to claim 17 or 18, wherein the to-be-decoded region comprises a plurality of feature points, and the probability estimation result of the to-be-decoded region comprises probability estimation results of the plurality of feature points in the to-be-decoded region; and determining the value probability of the flag corresponding to the to-be-decoded region based on the probability estimation result of the to-be-decoded region comprises:
determining, based on the probability estimation result of the to-be-decoded region, a number of feature points on which entropy decoding processing is skipped in the to-be-decoded region; and
determining the value probability of the flag based on the number of feature points on which entropy decoding processing is skipped in the to-be-decoded region and a total number of feature points in the to-be-decoded region.

20. The method according to claim 19, wherein determining, based on the probability estimation result of the to-be-decoded region, the number of feature points on which entropy decoding processing is skipped in the to-be-decoded region comprises:
using a number of feature points whose probability estimation results satisfy a preset condition in the to-be-decoded region as the number of feature points on which entropy decoding processing is skipped in the to-be-decoded region.

21. An encoder, wherein the encoder comprises:
an obtaining module, configured to obtain a to-be-encoded picture;
a feature extraction module, configured to extract a feature map of the to-be-encoded picture;
a probability estimation module, configured to determine a probability estimation result of a to-be-encoded region in the feature map; and
an entropy encoding module, configured to: determine, based on an original feature value of the to-be-encoded region and a reconstructed feature value of the to-be-encoded region that is determined after adaptive entropy encoding skip processing is performed on the to-be-encoded region, whether to perform adaptive entropy encoding skip processing on the to-be-encoded region; if yes, perform entropy encoding processing on at least one sub-block in the to-be-encoded region or skip entropy encoding processing on the at least one sub-block based on the probability estimation result of the to-be-encoded region, and set a flag corresponding to the to-be-encoded region to a first value; or if no, perform entropy encoding processing on the to-be-encoded region based on the probability estimation result of the to-be-encoded region, and set a flag corresponding to the to-be-encoded region to a second value; and encode the flag.

22. A decoder, wherein the decoder comprises:
a receiving module, configured to receive a bitstream;
an entropy decoding module, configured to: determine a probability estimation result of a to-be-decoded region in a feature map corresponding to the bitstream, and decode the bitstream to obtain a flag corresponding to the to-be-decoded region; and when the flag is a first value, perform entropy decoding processing on at least one sub-block in the to-be-decoded region or set a feature value of a feature point in the at least one sub-block to a specific value based on the probability estimation result of the to-be-decoded region, to obtain a feature value of a feature point in the to-be-decoded region; or when the flag is a second value, perform entropy decoding processing on the to-be-decoded region based on the probability estimation result of the to-be-decoded region, to obtain a feature value of a feature point in the to-be-decoded region; and
a feature decoding module, configured to perform reconstruction based on a feature value of a feature point in the feature map, to obtain a reconstructed picture.

23. An encoder, wherein the encoder comprises:
an obtaining module, configured to obtain a to-be-encoded picture;
a feature extraction module, configured to extract a feature map of the to-be-encoded picture;
a probability estimation module, configured to determine a probability estimation result of a to-be-encoded region in the feature map; and
an entropy encoding module, configured to: determine, based on an original feature value of the to-be-encoded region and a reconstructed feature value of the to-be-encoded region that is determined after entropy encoding processing on the to-be-encoded region is skipped, whether to skip entropy encoding processing on the to-be-encoded region; if yes, skip entropy encoding processing on the to-be-encoded region, and set a flag corresponding to the to-be-encoded region to a first value; or if no, perform entropy encoding processing on the to-be-encoded region based on the probability estimation result of the to-be-encoded region, and set a flag corresponding to the to-be-encoded region to a second value; determine a value probability of the flag based on the probability estimation result of the to-be-encoded region, wherein the value probability of the flag is a probability that the flag is the first value or a probability that the flag is the second value; and encode the flag based on the value probability of the flag.

24. A decoder, wherein the decoder comprises:
a receiving module, configured to receive a bitstream;
an entropy decoding module, configured to: determine a probability estimation result of a to-be-decoded region in a feature map corresponding to the bitstream; determine a value probability of a flag corresponding to the to-be-decoded region based on the probability estimation result of the to-be-decoded region, wherein the value probability of the flag is a probability that the flag is a first value or a probability that the flag is a second value; decode the bitstream to obtain the flag based on the value probability of the flag; and when the flag is the first value, set a feature value of a feature point in the to-be-decoded region to a specific value; or when the flag is the second value, perform entropy decoding processing on the to-be-decoded region based on the probability estimation result of the to-be-decoded region, to obtain a feature value of a feature point in the to-be-decoded region; and
a feature decoding module, configured to perform reconstruction based on a feature value of a feature point in the feature map, to obtain a reconstructed picture.

25. An electronic device, comprising:
a memory and a processor, wherein the memory is coupled to the processor; and
the memory stores program instructions, and when the program instructions are executed by the processor, the electronic device is enabled to perform the encoding method according to any one of claims 1 to 6, or perform the encoding method according to any one of claims 12 to 16.

26. An electronic device, comprising:
a memory and a processor, wherein the memory is coupled to the processor; and
the memory stores program instructions, and when the program instructions are executed by the processor, the electronic device is enabled to perform the decoding method according to any one of claims 7 to 11, or perform the decoding method according to any one of claims 17 to 20.

27. A chip, comprising one or more interface circuits and one or more processors, wherein the one or more processors receive or send data through the one or more interface circuits, and when the one or more processors execute computer instructions, the electronic device is enabled to perform the encoding method according to any one of claims 1 to 6, or perform the encoding method according to any one of claims 12 to 16.

28. A chip, comprising one or more interface circuits and one or more processors, wherein the one or more processors receive or send data through the one or more interface circuits, and when the one or more processors execute computer instructions, the electronic device is enabled to perform the decoding method according to any one of claims 7 to **11,** or perform the decoding method according to any one of claims 17 to 20.

29. A computer-readable storage medium, wherein the computer-readable storage medium stores a computer program, and when the computer program is run on a computer or a processor, the computer or the processor is enabled to perform the method according to any one of claims 1 to 20.

30. A computer program product, wherein the computer program product comprises computer instructions, and when the computer instructions are executed by a computer or a processor, the steps of the method according to any one of claims 1 to 20 are performed.

31. A bitstream storage apparatus, wherein the apparatus comprises a receiver and at least one storage medium;
the receiver is configured to receive a bitstream; and
the at least one storage medium is configured to store the bitstream, wherein
the bitstream is generated according to the encoding method according to any one of claims 1 to 6, or is generated according to the encoding method according to any one of claims 12 to 16.

32. A bitstream transmission apparatus, wherein the apparatus comprises a transmitter and at least one storage medium;
the at least one storage medium is configured to store a bitstream, wherein the bitstream is generated according to the encoding method according to any one of claims 1 to 6, or is generated according to the encoding method according to any one of claims 12 to 16; and
the transmitter is configured to obtain the bitstream from the storage medium, and send the bitstream to a terminal-side device through a transmission medium.

33. A bitstream delivery system, wherein the system comprises:
at least one storage medium, configured to store at least one bitstream, wherein the at least one bitstream is generated according to the encoding method according to any one of claims 1 to 6, or is generated according to the encoding method according to any one of claims 12 to 16; and
a streaming media device, configured to obtain a target bitstream from the at least one storage medium, and send the target bitstream to a terminal-side device, wherein the streaming media device comprises a content server or a content delivery server.
